(19) Europäisches Patentamt / European Patent Office / Office européen des brevets

(11) **EP 4 712 634 A1**

(12) **EUROPEAN PATENT APPLICATION**
published in accordance with Art. 153(4) EPC

(43) Date of publication:
**18.03.2026 Bulletin 2026/12**

(21) Application number: **24818616.5**

(22) Date of filing: **03.06.2024**

(51) International Patent Classification (IPC):
**H04W 72/0453** (2023.01)

(52) Cooperative Patent Classification (CPC):
**H04L 27/26; H04W 72/0453; H04W 72/0457**

(86) International application number:
**PCT/CN2024/097062**

(87) International publication number:
**WO 2024/251084 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.06.2023 CN 202310658282**

(71) Applicant: **Huawei Technologies Co., Ltd.
Shenzhen, Guangdong 518129 (CN)**

(72) Inventors:
- **GONG, Bo**
  **Shenzhen, Guangdong 518129 (CN)**
- **HU, Mengshi**
  **Shenzhen, Guangdong 518129 (CN)**
- **GAN, Ming**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD, COMMUNICATION APPARATUS, AND COMMUNICATION SYSTEM**

(57) A communication method, a communication apparatus, and a communication system are provided, are applied to a wireless local area network system that supports the 802.11 series protocols, for example, a next-generation Wi-Fi protocol of IEEE 802.11ax, such as 802.11be, Wi-Fi 7, or EHT, for another example, a next-generation of 802.11be, such as 802.11bn or Wi-Fi 8, 802.11ay, or 802.11aj, and may be further applied to a UWB-based wireless personal area network system, a sensing (sensing) system, and the like. A first communication apparatus generates and sends a PPDU. Correspondingly, a second communication apparatus receives and parses the PPDU. A bandwidth for transmitting the PPDU may include 128 subcarriers, and a quantity of pilot subcarriers in the 128 subcarriers is greater than 6. A packet error rate is effectively reduced by using the foregoing method.

FIG. 5a

## Description

This application claims priority to Chinese Patent Application No. 202310658282.3, filed with the China National Intellectual Property Administration on June 5, 2023 and entitled "COMMUNICATION METHOD, COMMUNICATION APPARATUS, AND COMMUNICATION SYSTEM", which is incorporated herein by reference in its entirety.

## TECHNICAL FIELD

This application relates to the field of communication technologies, and in particular, to a communication method, a communication apparatus, and a communication system.

## BACKGROUND

From 802.11a/g to 802.11n, 802.11ac, 802.11ax, 802.11be, and the like, a wireless local area network (wireless local area network, WLAN) uses a frequency band from 2.4 GHz to 2.4 GHz/5 GHz, and then to 2.4 GHz/5 GHz/6 GHz, and supports a bandwidth expanded from 20 MHz to 320 MHz. The wireless local area network has continuously increasing spectral efficiency and throughputs. A next-generation WLAN technology further improves a physical layer capability of the wireless local area network, and introduces a millimeter-wave frequency band like 45 GHz/60 GHz.

Currently, a manner of sending a high frequency band physical layer signal is considered, that is, directly sending a high frequency band physical layer signal obtained by increasing a carrier spacing (for example, a bandwidth) of a physical layer signal of a 802.11n/802.11ac/802.11ax/802.11be protocol by an integer multiple. In this way, it is ensured that a process of processing a digital signal of the high frequency band signal is close to a process of processing a digital signal of a low frequency band signal. The foregoing manner facilitates chip design and implementation for a next-generation WLAN protocol that supports both a high frequency band and a low frequency band.

However, a packet error rate in the foregoing manner is high, and therefore, the packet error rate further needs to be reduced.

## SUMMARY

Embodiments of this application provide a communication method, a communication apparatus, and a communication system, to effectively reduce a packet error rate.

According to a first aspect, an embodiment of this application provides a communication method. The method may be applied to a first communication apparatus, the first communication apparatus may be a Wi-Fi device, a chip or a module in a Wi-Fi device, or the like, and the method includes:
generating a physical layer (physical, PHY) protocol data unit (PHY protocol data unit, PPDU); and transmitting the PPDU in a high frequency band. A bandwidth for transmitting the PPDU includes N subcarriers, the N subcarriers include M pilot subcarriers, and both M and N are positive integers.

In a possible implementation, the bandwidth for transmitting the PPDU includes 128 subcarriers, and a quantity of pilot subcarriers in the 128 subcarriers is greater than 6.

In this embodiment of this application, a quantity of pilot subcarriers in a bandwidth of a high frequency band PPDU is properly designed, to effectively reduce a packet error rate, and improve link performance. In addition, a second communication apparatus may further have an enough quantity of pilots to correct a frequency offset, to improve accuracy of data demodulation performed by the second communication apparatus.

It may be understood that the high frequency band PPDU may be understood as the PPDU transmitted in the high frequency band, and a low frequency band PPDU may be understood as a PPDU transmitted in a low frequency band.

According to a second aspect, an embodiment of this application provides a communication method. The method may be applied to a second communication apparatus, the second communication apparatus may be a Wi-Fi device, a chip or a module in a Wi-Fi device, or the like, and the method includes:
receiving a physical layer protocol data unit PPDU in a high frequency band, where a bandwidth for transmitting the PPDU includes N subcarriers, the N subcarriers include M pilot subcarriers, and both M and N are positive integers; and parsing the PPDU.

For example, the N subcarriers and the M pilot subcarriers may be for a data field in the PPDU. For example, for the data field in the PPDU, the bandwidth of the PPDU includes the N subcarriers, and the N subcarriers include the M pilot subcarriers.

In a possible implementation, the bandwidth for transmitting the PPDU includes 128 subcarriers, and a quantity of pilot subcarriers in the 128 subcarriers is greater than 6.

With reference to the first aspect or the second aspect, in a possible implementation, M is greater than a quantity of pilot subcarriers that are in a bandwidth of a low frequency band PPDU and that correspond to the N subcarriers.

In this embodiment of this application, a quantity of pilot subcarriers in a bandwidth of a high frequency band PPDU is greater than the quantity of pilot subcarriers in the bandwidth of the low frequency band PPDU, to effectively reduce a packet error rate, and improve link performance.

With reference to the first aspect or the second aspect, in a possible implementation, the quantity of pilot subcarriers in the bandwidth for transmitting the PPDU is any one of the following: 8, 10, 12, 14, 16, 18, and 20.

With reference to the first aspect or the second aspect, in a possible implementation, a quantity of data subcarriers in the bandwidth for transmitting the PPDU is less than 108.

The quantity of pilot subcarriers can be increased by reducing a quantity of data subcarriers in the bandwidth of the high frequency band PPDU. In addition, when generating the PPDU, a first communication apparatus may reuse a generation mode of a signal carried on a data subcarrier in the low frequency band PPDU.

With reference to the first aspect or the second aspect, in a possible implementation, the quantity of data subcarriers in the bandwidth for transmitting the PPDU is 102 or 72.

With reference to the first aspect or the second aspect, in a possible implementation, a quantity of guard subcarriers in the bandwidth for transmitting the PPDU is less than or equal to 11.

By reducing the quantity of guard subcarriers, spectrum utilization can be effectively improved, and the quantity of pilot subcarriers can be increased.

With reference to the first aspect or the second aspect, in a possible implementation, the quantity of pilot subcarriers is 12, and pilot values of the pilot subcarriers are any one of the following:

$$[1\ 1\ 1\ -1\ -1\ 1\ 1\ 1\ 1\ -1\ -1\ 1],$$

$$[1\ 1\ 1\ -1\ -1\ 1\ 1\ 1\ 1\ 1\ 1\ -1],$$

and

$$[1\ 1\ 1\ -1\ 1\ 1\ 1\ -1\ -1\ 1\ 1\ 1];$$

or the quantity of pilot subcarriers is 14, and pilot values of the pilot subcarriers are any one of the following:

$$[1\ 1\ 1\ -1\ -1\ 1\ 1\ 1\ 1\ 1\ 1\ -1\ -1\ 1],$$

and

$$[1\ 1\ 1\ -1\ -1\ 1\ 1\ 1\ 1\ -1\ -1\ 1\ 1\ 1].$$

With reference to the first aspect or the second aspect, in a possible implementation, the quantity of pilot subcarriers is 12, and indexes of the pilot subcarriers are [-51, -42, -33, -24, -15, -6, 6, 15, 24, 33, 42, 51], or [-53, -39, -25, -18, -11, -7, 7, 11, 18, 25, 39, 53]; or the quantity of pilot subcarriers is 14, and indexes of the pilot subcarriers are [-53, -45, -37, -29, -21, -13, -5, 5, 13, 21, 29, 37, 45, 53], or [-55, -53, -39, -25, -18, -11, -6, 6, 11, 18, 25, 39, 53, 55].

With reference to the first aspect or the second aspect, in a possible implementation, the quantity of data subcarriers in the bandwidth for transmitting the PPDU is 102, a quantity of direct current subcarriers in the bandwidth for transmitting the PPDU is 3, the quantity of pilot subcarriers in the bandwidth for transmitting the PPDU is 12, and the quantity of guard subcarriers in the bandwidth for transmitting the PPDU is 11; or
the quantity of data subcarriers in the bandwidth for transmitting the PPDU is 102, a quantity of direct current subcarriers in the bandwidth for transmitting the PPDU is 3, the quantity of pilot subcarriers in the bandwidth for transmitting the PPDU is 14, and the quantity of guard subcarriers in the bandwidth for transmitting the PPDU is 9.

With reference to the first aspect or the second aspect, in a possible implementation, a coding scheme of the data subcarriers in the bandwidth for transmitting the PPDU is the same as a coding scheme of data subcarriers in a resource unit (resource unit, RU) or a multiple resource unit (multiple RU, MRU), and a quantity of subcarriers included in the RU or the MRU is less than 242.

The quantity of data subcarriers in the bandwidth for transmitting the PPDU is the same as a quantity of data subcarriers in the RU or the MRU, and the quantity of subcarriers included in the RU or the MRU is less than 242.

With reference to the first aspect or the second aspect, in a possible implementation, the RU is an RU including 106 subcarriers, and the 106 subcarriers include 102 data subcarriers.

With reference to the first aspect or the second aspect, in a possible implementation, the MRU is an MRU including 78 subcarriers, and the 78 subcarriers include 72 data subcarriers.

According to a third aspect, an embodiment of this application provides a first communication apparatus configured to perform the method according to any one of the first aspect or the possible implementations of the first aspect. The first communication apparatus includes a unit that performs the method according to any one of the first aspect or the possible implementations of the first aspect.

According to a fourth aspect, an embodiment of this application provides a second communication apparatus configured to perform the method according to any one of the second aspect or the possible implementations of the second aspect. The second communication apparatus includes a unit that performs the method according to any one of the second aspect or the possible implementations of the second aspect.

According to a fifth aspect, an embodiment of this application provides a first communication apparatus. The first communication apparatus includes a processor configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the first communication apparatus.

In a possible implementation, the memory is located inside the first communication apparatus.

In this embodiment of this application, the processor and the memory may be further integrated into one component, that is, the processor and the memory may be further integrated together. For example, the first communication apparatus may be a chip.

In a possible implementation, the first communication apparatus further includes a transceiver. The transceiver is configured to receive a signal or send a signal. For example, the transceiver may be further configured to send an PPDU.

According to a sixth aspect, an embodiment of this application provides a second communication apparatus. The second communication apparatus includes a processor configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the second communication apparatus.

In a possible implementation, the memory is located inside the second communication apparatus.

In this embodiment of this application, the processor and the memory may be further integrated into one component, that is, the processor and the memory may be further integrated together. For example, the second communication apparatus may be a chip.

In a possible implementation, the second communication apparatus further includes a transceiver. The transceiver is configured to receive a signal or send a signal. For example, the transceiver may be configured to receive a PPDU.

According to a seventh aspect, an embodiment of this application provides a first communication apparatus. The first communication apparatus includes a logic circuit and an interface. The logic circuit is coupled to the interface. The interface is configured to input and/or output information. The logic circuit is configured to perform the method according to any one of the first aspect or the possible implementations of the first aspect. That the interface is configured to output the information may include: The interface is configured to output a PPDU. For example, the logic circuit is configured to generate the PPDU.

According to an eighth aspect, an embodiment of this application provides a second communication apparatus. The second communication apparatus includes a logic circuit and an interface. The logic circuit is coupled to the interface. The interface is configured to input and/or output information. The logic circuit is configured to perform the method according to any one of the second aspect or the possible implementations of the second aspect. That the interface is configured to input the information includes: The interface is configured to input a PPDU. For example, the logic circuit is configured to parse the PPDU.

According to a ninth aspect, an embodiment of this application provides a computer-readable storage medium. The computer-readable storage medium is configured to store a computer program. When the computer program is run on a computer, the method according to the first aspect, the second aspect, or any possible implementation is enabled to be performed.

According to a tenth aspect, an embodiment of this application provides a computer program product. The computer program product includes a computer program or computer code. When the computer program product runs on a computer, the method according to the first aspect, the second aspect, or any possible implementation is enabled to be performed.

According to an eleventh aspect, an embodiment of this application provides a computer program. When the computer program is run on a computer, the method according to the first aspect, the second aspect, or any possible implementation is enabled to be performed.

According to a twelfth aspect, an embodiment of this application provides a communication system. The communication system includes a first communication apparatus and a second communication apparatus, the first communication apparatus is configured to perform the method according to any one of the first aspect or the possible implementations of the first aspect, and the second communication apparatus is configured to perform the method according to any one of the second aspect or the possible implementations of the second aspect.

**BRIEF DESCRIPTION OF DRAWINGS**

FIG. 1 is a diagram of an architecture of a communication system according to an embodiment of this application;
FIG. 2a to FIG. 2d are diagrams of frame formats of PPDUs according to an embodiment of this application;
FIG. 3a is a diagram of a generation process of a PPDU according to an embodiment of this application;
FIG. 3b is a diagram of a decoding process of a PPDU according to an embodiment of this application;
FIG. 4a and FIG. 4b are distribution maps of RUs or MRUs according to an embodiment of this application;
FIG. 5a is a schematic flowchart of a communication method according to an embodiment of this application;

FIG. 5b to FIG. 5f are diagrams of tone plans according to an embodiment of this application;

FIG. 6 is a schematic flowchart of a communication method according to an embodiment of this application; and

FIG. 7 to FIG. 9 are diagrams of structures of communication apparatuses according to an embodiment of this application.

## DESCRIPTION OF EMBODIMENTS

In the specification, the claims, and the accompanying drawings of this application, the terms "first", "second", and the like are merely intended to distinguish between different objects but do not indicate a particular order. In addition, the terms "including", "having", and any other variant thereof are intended to cover a non-exclusive inclusion. For example, a process, a method, a system, a product, a device, or the like that includes a series of steps or units is not limited to the listed steps or units, but optionally further includes a step, a unit, or the like that is not listed, or optionally further includes another step or unit inherent to the process, the method, the product, the device, or the like.

An "embodiment" mentioned in this specification means that a particular feature, structure, or characteristic described with reference to the embodiment may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that embodiments described in the specification may be combined with another embodiment.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist, where A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following items (pieces)" or a similar expression thereof refers to any combination of these items. For example, at least one (piece) of a, b, or c may represent: a, b, c, "a and b", "a and c", "b and c", or "a, b, and c".

The following describes a communication system in embodiments of this application.

The technical solutions according to embodiments of this application may be applied to a WLAN system, for example, Wi-Fi. For example, the method according to embodiments of this application is applicable to the IEEE 802.11 series protocols, for example, the 802.11a/b/g protocol (for example, the 802.11bf protocol), the 802.11n protocol, the 802.11ac protocol, the 802.11ax protocol, the 802.11be protocol, and the 802.11bn protocol or a next-generation protocol. Examples are not enumerated herein. The technical solutions according to embodiments of this application may be further applied to an ultra-wideband (ultra-wideband, UWB)-based wireless personal area network (wireless personal area network, WPAN). For example, the method according to embodiments of this application may be applied to IEEE 802.15 series protocols, for example, the 802.15.4a protocol, the 802.15.4z protocol, the 802.15.4ab protocol, or a future generation UWB WPAN protocol. Examples are not enumerated herein. The technical solutions according to embodiments of this application may be further applied to the following communication systems, for example, an internet of things (internet of things, IoT) system, a vehicle-to-everything (vehicle to X, V2X) system, a narrowband internet of things (narrowband internet of things, NB-IoT) system, a long term evolution (long term evolution, LTE) system, a 5th generation (5th generation, 5G) communication system, and a new communication system that emerges in future communication development.

The WLAN system can provide high-rate and low-latency transmission. With continuous evolution of WLAN application scenarios, the WLAN system is to be applied to more scenarios or industries, for example, an internet of things industry, an internet of vehicles industry, a banking industry, enterprise offices, stadiums and exhibition halls, concert halls, hotel rooms, dormitories, wards, classrooms, supermarkets, squares, streets, production workshops, and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, and a washing machine) in a smart home, an internet of things node, an entertainment terminal (for example, a wearable device such as an augmented reality (augmented reality, AR) device or a virtual reality (virtual reality, VR) device), an intelligent device (for example, a printer, a projector, a loudspeaker, or a speaker) in intelligent office, an internet of vehicles device in the internet of vehicles, an infrastructure in a daily life scenario (for example, a vending machine, a self-service navigation console of a supermarket, a self-service cashier device, and a self-service ordering machine), a device in a large sports and music venue, and the like. For example, the access point and the station may be devices used in an internet of vehicles, internet of things nodes, sensors, or the like in an internet of things (internet of things, IoT), smart cameras, smart remote controls, or smart water or electricity meters in a smart home, or sensors in a smart city, or the like.

Although embodiments of this application mainly use a WLAN as an example, especially a network applied to IEEE 802.11 series standards, for example, a system supporting Wi-Fi 7 that may also be referred to as extremely high throughput (extremely high throughput, EHT), and for another example, a system supporting Wi-Fi 8 that may also be referred to as ultra high reliability (ultra high reliability, UHR) or ultra high reliability and throughput (ultra high reliability and throughput, UHRT), a person skilled in the art easily understands that aspects in embodiments of this application may be extended to other networks using various standards or protocols, for example, Bluetooth (Bluetooth), a high performance radio LAN (high performance radio LAN, HIPERLAN) (a wireless standard similar to the IEEE 802.11 standard, mainly used in Europe), a wide area network (WAN), or another network known or developed in the future.

It may be understood that a throughput shown in embodiments of this application may also be referred to as a throughput rate.

The method according to embodiments of this application may be implemented by a communication apparatus in a communication system. For example, the communication apparatus may be an access point (access point, AP) or a station (station, STA).

The access point is an apparatus having a wireless communication function, supports communication or sensing by using a WLAN protocol, has a function of communicating with or sensing another device (for example, a station or another access point) in a WLAN network, and certainly, may further have a function of communicating with or sensing another device. Alternatively, the access point is equivalent to a bridge that connects a wired network and a wireless network. A main function of the access point is to connect various wireless network clients together and then connect the wireless network to the Ethernet. In the WLAN system, the access point may be referred to as an access point station (AP STA). The apparatus having the wireless communication function may be an entire device, or may be a chip or a processing system or a module installed in the entire device. The device in which the chip or the processing system or the module is installed may implement the method, the function, and the like in embodiments of this application under control of the chip or the processing system or the module. The AP in embodiments of this application is an apparatus that provides a service for the STA, and may support the 802.11 series protocols, subsequent protocols, or the like. For example, the access point may be an access point for a terminal (for example, a mobile phone) to access a wired (or wireless) network, and is mainly deployed in a home, a building, and a park. A typical coverage radius is tens to hundreds of meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. Certainly, the AP may alternatively be a chip or a processing system or a module in these devices in various forms, to implement the method and the function in embodiments of this application.

The station is an apparatus having a wireless communication function, supports communication or sensing by using the WLAN protocol, and has a capability of communicating with or sensing another station or the access point in the WLAN network. In the WLAN system, the station may be referred to as a non-access point station (non-access point station, non-AP STA). For example, the STA is any user communication device that allows a user to communicate with or sense an AP and further communicate with a WLAN. The apparatus having the wireless communication function may be an entire device, or may be a chip or a processing system or a module installed in the entire device. The device in which the chip or the processing system or the module is installed may implement the method, the function, and the like in embodiments of this application under control of the chip or the processing system or the module. For example, the station may be a wireless communication chip, a wireless sensor, or a wireless communication terminal, and may also be referred to as a user. For another example, the station may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, or a computer supporting a Wi-Fi communication function. Certainly, the STA may alternatively be a chip or a processing system or a module in these devices in various forms, to implement the method and the function in embodiments of this application.

For example, a communication system to which the method according to embodiments of this application may be applied may include an access point and a station. For example, this application may be applicable to a scenario in which an AP communicates with or senses a STA in the WLAN. For example, the AP may communicate with or sense a single STA, or the AP may simultaneously communicate with or sense a plurality of STAs. For example, communication or sensing between the AP and the plurality of STAs may be classified into downlink transmission in which the AP simultaneously sends signals to the plurality of STAs and uplink transmission in which the plurality of STAs send signals to the AP. The AP and the STA may support a WLAN communication protocol. The communication protocol may include IEEE 802.11 series protocols, for example, is applicable to the 802.11n/802.11ac/802.11ax/802.11be/802.11bn standard, and certainly is also applicable to a standard later than the 802.11bn standard.

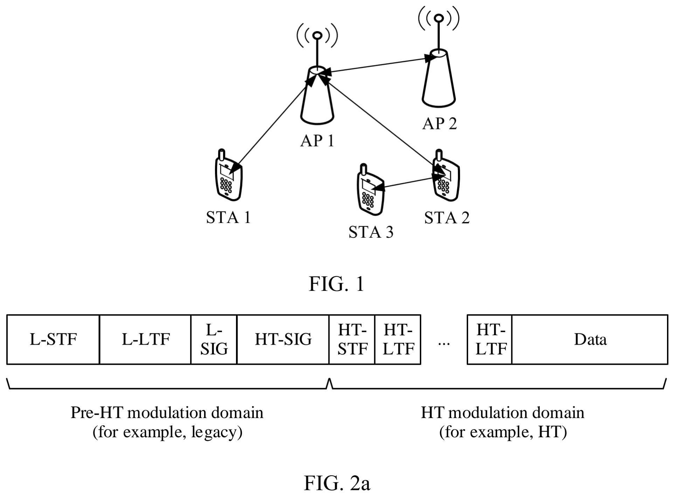

FIG. 1 is a diagram of an architecture of a communication system according to an embodiment of this application. The communication system may include one or more APs and one or more STAs. FIG. 1 shows two access points: an AP 1 and an AP 2, and three stations: a STA 1, a STA 2, and a STA3. The method according to embodiments of this application may be applicable to data communication between one AP and one or more STAs (for example, communication between the AP 1 and the STA 1 shown in FIG. 1, or communication between the AP 1, and the STA 1 and the STA 2), or may also be applicable to communication between APs (for example, communication between the AP 1 and the AP 2 shown in FIG. 1), or may be applicable to communication between STAs (for example, communication between the STA 2 and the STA 3 shown in FIG. 1).

It can be understood that, in FIG. 1, an example in which the STA is a mobile phone and the AP is a router is used. This does not mean that types of the AP and the STA in embodiments of this application are limited. Moreover, FIG. 1 shows only two APs and three STAs as an example. However, there may be more or fewer APs or STAs. This is not limited in embodiments of this application.

From different perspectives of sending a PPDU and receiving the PPDU, a first communication apparatus shown below may be understood as a communication apparatus for sending the PPDU, and a second communication apparatus shown below may be understood as a communication apparatus for receiving the PPDU. In an example, the first communication apparatus and the second communication apparatus may be Wi-Fi chips or modules or processing systems or the like disposed in different Wi-Fi devices. In another example, the first communication apparatus may be an AP, and the second communication apparatus may be a STA. In still another example, both the first communication apparatus and the second communication apparatus may be STAs or APs. In still another example, the first communication apparatus may be a STA, and the second communication apparatus may be an AP. In still another example, at least one of the first communication apparatus and the second communication apparatus may be a multi-link device (multi-link device, MLD), or the like. Examples are not enumerated in embodiments of this application.

It may be understood that, in embodiments of this application, the method according to embodiments of this application is described based on two sides: the first communication apparatus and the second communication apparatus. However, in a process in which the first communication apparatus and the second communication apparatus transmit a PPDU, the PPDU may be further forwarded by another apparatus, for example, the PPDU between the first communication apparatus and the second communication apparatus is forwarded by a forwarding apparatus. An apparatus other than the first communication apparatus and the second communication apparatus is not limited in embodiments of this application.

To achieve an objective of reusing a baseband for a high frequency band PPDU and a low frequency band PPDU, the high frequency band PPDU may be obtained by increasing a subcarrier spacing (compared with a subcarrier spacing in a bandwidth of a low frequency band PPDU in the 802.11n/802.11ac/802.11ax/802.11be protocol), and the high frequency band PPDU is sent by using a high frequency band. In the foregoing manner, a total quantity of subcarriers in the bandwidth of the high frequency band PPDU generated by reusing the baseband is the same as a total quantity of subcarriers in the bandwidth of the corresponding low frequency band PPDU, and a quantity of pilot subcarriers in the bandwidth of the high frequency band PPDU and indexes of the pilot subcarriers are the same as a quantity of pilot subcarriers in the bandwidth of the corresponding low frequency band PPDU and indexes of the pilot subcarriers.

However, because a channel environment, interference intensity, and the like that the high frequency band PPDU faces are different from those of the low frequency band PPDU, a packet error rate of the foregoing manner is high. Therefore, new research and design need to be performed on the subcarriers in the bandwidth of the high frequency band PPDU.

In view of this, embodiments of this application provide a communication method, a communication apparatus, and a communication system, to effectively reduce a packet error rate, and improve link performance. The packet error rate may be a proportion of erroneous PPDUs received by the communication apparatus. For example, in the method shown in embodiments of this application, a quantity of pilot subcarriers in a bandwidth of a high frequency band PPDU can ensure that a second communication apparatus has an enough quantity of pilots to correct a frequency offset, thereby improving accuracy of data demodulation. For example, a quantity of data subcarriers in the bandwidth of the high frequency band PPDU shown in embodiments of this application may be consistent with a quantity of data subcarriers in one RU or one MRU, so that all or some generation modes (or generation circuits) of the data subcarriers in the RU or the MRU can be reused, thereby improving baseband chip utilization and reducing costs.

The following describes related terms in embodiments of this application.

1. OFDMA transmission

The orthogonal frequency division multiplexing (orthogonal frequency division multiplexing, OFDM) is a basic transmission mode for wireless communication, and is widely applied to wireless communication systems such as LTE, WiMAX, and Wi-Fi. In addition, the OFDM may be further applied to fixed network transmission, for example, in a transmission mode in which an optical fiber, a stranded copper wire, a cable, or the like is used. A basic principle of the OFDM is to use orthogonality of subcarriers, and select a smallest small subcarrier spacing within an allowed range, so that a plurality of parallel paths that do not interfere with each other can be formed, and frequency utilization efficiency of a system can be improved.

Further, because the OFDM has the foregoing features, if subcarriers of the OFDM that do not interfere with each other are allocated to a plurality of users, multi-user access or data transmission can be implemented through the OFDM. This is orthogonal frequency division multiple access (orthogonal frequency division multiple access, OFDMA). The OFDMA can be used for parallel transmission of multi-user data, and is an effective way to improve data transmission concurrency.

2. Bandwidth for transmitting a PPDU

The bandwidth for transmitting the PPDU may include N subcarriers, where N is a positive integer. The N subcarriers may include a subcarrier, a data subcarrier, a guard subcarrier, and a direct current subcarrier. For example, the guard subcarrier and the direct current subcarrier may carry no signal, or it may be considered that values of signals carried on the guard subcarrier and the direct current subcarrier are 0. A pilot subcarrier is a subcarrier for carrying a pilot, and the data subcarrier is a subcarrier for placing or carrying data. Alternatively, it may be considered that the data subcarrier is used to carry load information, the pilot subcarrier is used to carry a pilot signal, and the pilot signal may be determined based on a pilot value.

That the bandwidth for transmitting the PPDU includes the N subcarriers may also be understood as: A channel for transmitting the PPDU includes the N subcarriers, or the PPDU corresponds to the N subcarriers, or the bandwidth for transmitting the PPDU is divided into the N subcarriers, or the bandwidth for transmitting the PPDU corresponds to the N subcarriers. For example, when a frequency band used by a first communication apparatus to transmit the PPDU is a frequency band between 42.5 GHz and 71 GHz, or a frequency band greater than or equal to (super) 45 GHz, the channel for transmitting the PPDU may be referred to as a high frequency channel. For example, when the frequency band used by the first communication apparatus to transmit the PPDU is a frequency band less than 7 GHz (sub-7 GHz), the channel for transmitting the PPDU may also be referred to as a low frequency channel. For example, a dimension of the high frequency channel is used as an example. That the bandwidth for transmitting the PPDU includes the N subcarriers may also be understood as: The high frequency channel includes the N subcarriers, or the high frequency channel corresponds to the N subcarriers. Alternatively, a relationship between a subcarrier and a PPDU may be described in another manner. This is not limited in embodiments of this application. For brevity, in embodiments of this application, the bandwidth for transmitting the PPDU is referred to as a bandwidth of the PPDU for short.

That the bandwidth of the PPDU includes the N subcarriers may also be understood as that an IDFT size (IDFT size) of the PPDU is N, or a DFT size (DFT size) of the PPDU is N. For descriptions of the IDFT size and the DFT size, refer to related descriptions of the term 3, for example, N=128, N=64, or N=256. The N subcarriers may also be referred to as a total quantity (or a total number, or a total count) of subcarriers included in the PPDU, or the like. For ease of description, the following uses N=128 as an example to describe the solutions according to embodiments of this application.

For example, for the 802.11n/802.11ac/802.11ax/802.11be protocol, the bandwidth of the PPDU may be less than or equal to 320 MHz. For example, the bandwidth of the PPDU may be any one of the following: 20 MHz, 40 MHz, 80 MHz, 160 MHz, and 320 MHz. Refer to a related protocol for a quantity of pilot subcarriers and index values of the pilot subcarriers, a quantity of data subcarriers and index values of the data subcarriers, a quantity of guard subcarriers and index values of the guard subcarriers, and a quantity of direct current subcarriers and index values of the direct current subcarriers that are involved when the bandwidth of the PPDU includes the N subcarriers. Examples are not enumerated herein. It may be understood that the protocol shown herein may also be referred to as a low frequency band protocol, and the involved PPDU may also be understood as a low frequency band PPDU, or a PPDU generated according to the low frequency band protocol, or the PPDU transmitted in a low frequency band, or the like. It may be understood that the low frequency band protocols enumerated in embodiments of this application are merely an example, and another low frequency band protocol may appear subsequently as a standard progresses.

For example, for the 802.11ay or 802.11aj protocol, the bandwidth of the PPDU may be greater than or equal to 160 MHz. For example, the bandwidth of the PPDU may be any one of the following: 160 MHz, 320 MHz, 640 MHz, 1280 MHz, and 2560 MHz. Refer to the following for a quantity of pilot subcarriers and index values of the pilot subcarriers, a quantity of data subcarriers and index values of the data subcarriers, a quantity of guard subcarriers and index values of the guard subcarriers, and a quantity of direct current subcarriers and index values of the direct current subcarriers that are involved when the bandwidth of the PPDU includes the N subcarriers. Details are not described herein. The protocol shown herein may also be referred to as a high frequency band protocol, and the involved PPDU may also be understood as a high frequency band PPDU, or a PPDU generated according to the high frequency band protocol, or the PPDU transmitted in a high frequency band, or the like. A protocol number related to a high frequency band signal is not limited in embodiments of this application. For example, a new protocol number may appear subsequently as a standard progresses. Certainly, the foregoing manner of distinguishing different protocols is merely an example, and the foregoing manner of distinguishing protocol numbers according to the low frequency band protocol and the high frequency band protocol should not be understood as a limitation on embodiments of this application.

It may be understood that, from a dimension of a physical layer of the first communication apparatus, the first communication apparatus may generate the PPDU. When the PPDU is sent via an antenna, the PPDU sent via the antenna may be referred to as a signal, or the PPDU transmitted over the bandwidth may be referred to as a signal. Therefore, the PPDU and the signal in embodiment of this application may be considered to be equivalent. For example, the low frequency band PPDU and a low frequency band signal in the 802.11n/802.11ac/802.11ax/802.11be protocol may be considered to be equivalent, and the high frequency band PPDU and a high frequency band signal in the 802.11ay or 802.11aj protocol may be considered to be equivalent. For brevity, embodiments of this application may be described by using the high frequency band PPDU and the low frequency band PPDU as an example. Unless otherwise specified, when a PPDU is not distinguished from the high frequency band PPDU or the low frequency band PPDU in the following, it indicates that related descriptions may be applicable to both the low frequency band PPDU and the high frequency band PPDU.

3. DFT size (DFT size) and IDFT size (IDFT size)

For a first communication apparatus, that is, a communication apparatus that sends the PPDU, the IDFT size is used when the first communication apparatus performs IDFT. For a second communication apparatus, that is, a communication apparatus that receives the PPDU, the DFT size is used when the second communication apparatus performs DFT. For example, the DFT size is equal to the IDFT size. The IDFT size may also be referred to as an IDFT dimension, and the IDFT dimension may be a point quantity of the inverse discrete Fourier transform. The DFT size may also be referred to as a DFT dimension, and the DFT dimension may be a point quantity of the discrete Fourier transform. For ease of description, the IDFT size is used as an example below for description.

The IDFT size is the same as the total quantity of subcarriers in the bandwidth of the PPDU. The bandwidth of the PPDU may be determined based on the total quantity of subcarriers and a subcarrier spacing that are in the bandwidth of the PPDU. For example, a clock of a digital-to-analog converter (digital-to-analog converter, DAC) may be determined based on the bandwidth of the PPDU, and the subcarrier spacing may be determined based on the bandwidth of the PPDU and an IDFT size selected for a digital signal. From a perspective of comparison between the low frequency band PPDU and the high frequency band PPDU, a relationship between the total quantity of subcarriers, the bandwidth of the PPDU, and the subcarrier spacing may be shown as follows.

In an example, total quantities of subcarriers included in the bandwidths of the PPDUs each are 128. For example, a subcarrier spacing of the bandwidth of the low frequency band PPDU (or referred to as a subcarrier spacing of the low frequency channel) is 312.5 kHz, and a subcarrier spacing of the bandwidth of the high frequency band PPDU (or referred to as a subcarrier spacing of the high frequency channel) is 312.5 kHz*8=2.5 MHz (that is, the subcarrier spacing of the bandwidth of the low frequency band PPDU is increased by eight times). The bandwidth of the low frequency band PPDU is 128*312.5 kHz=40 MHz, and the bandwidth of the high frequency band PPDU is 128*2.5 MHz=320 MHz.

In another example, total quantities of subcarriers included in the bandwidths of the PPDUs each are 128. For example, a subcarrier spacing of the bandwidth of the low frequency band PPDU is 312.5 kHz, and a subcarrier spacing of the bandwidth of the high frequency band PPDU is 312.5 kHz*16=5 MHz (that is, the subcarrier spacing of the bandwidth of the low frequency band PPDU is increased by 16 times). The bandwidth of the high frequency band PPDU is 128*5 MHz=640 MHz.

In embodiments of this application, for the low frequency band PPDU and the high frequency band PPDU, although the total quantities of subcarriers included in the bandwidths of the PPDUs each are 128, quantities of data subcarriers and quantities of pilot subcarriers may be different. For the low frequency band PPDU and the high frequency band PPDU, the total quantities of subcarriers included in the bandwidths of the PPDUs are the same, which may also be understood as that an index value of a subcarrier in the bandwidth of the high frequency band PPDU is the same as an index value of a subcarrier in the bandwidth of the low frequency band PPDU; or a sample rate of the high frequency band PPDU is an integer multiple of a minimum sample rate of the low frequency band PPDU, where the minimum sample rate is 20 MHz. A sampling clock of the baseband chip can be reused based on a relationship between the sample rate of the high frequency band PPDU and the sample rate of the low frequency band PPDU. The sample rate may also be referred to as a baseband clock frequency, a baseband sampling clock frequency, or the like.

4. PPDU

From a perspective of a time domain, the PPDU may include a preamble and a data field. The preamble includes an STF field, an LTF field, a SIG field, and the like, and each field may occupy one or more OFDM symbols.

From a perspective of a frequency domain, the bandwidth of the PPDU may include a plurality of subcarriers. For example, the bandwidth of the PPDU may include the data subcarrier, the pilot subcarrier, the direct current subcarrier, and the guard subcarrier.

The following describes a frame format of the PPDU in detail.

FIG. 2a shows a frame structure of a PPDU in a high throughput (high throughput, HT) hybrid mode in the 802.11n protocol. The PPDU may be divided into two parts based on different modulation modes. One part is a part that is set to be compatible with a legacy frame, which is referred to as a pre-HT (pre-HT) modulation domain (or referred to as a pre-HT modulation field), and includes a legacy preamble (for example, a legacy short training field (legacy short training field, L-STF) and a legacy long training field (legacy long training field, L-LTF)), a legacy signal (legacy signal, L-SIG) field, and a high-throughput signal field (high-throughput signal field, HT-SIG). The other part is a frame structure that uses HT modulation, which is referred to as an HT modulation domain, and includes a high throughput short training field (high throughput short training field, HT-STF), a high throughput long training field (high throughput long training field, HT-LTF), and a data (data) field.

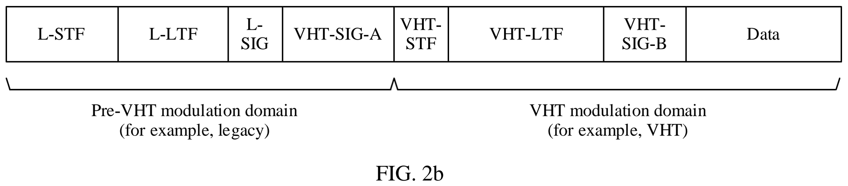

FIG. 2b shows a frame structure of a PPDU in a very high throughput (very high throughput, VHT) mode in the 802.11ac protocol. Similar to the PPDU in the 802.11n protocol, the PPDU may also be divided into two parts. One part is a pre-VHT modulation domain that is compatible with a legacy frame structure, and includes a legacy preamble (for example, an L-STF and an L-LTF), a legacy signal (L-SIG) field, and a very high throughput signal field A (very high throughput signal field A, VHT-SIG-A). The other part is a frame structure that uses VHT modulation, which is referred to as a VHT modulation domain, and includes a very high throughput short training field (very high throughput short training field, VHT-STF), a very high throughput long training field (very high throughput long training field, VHT-LTF), a very high throughput signal field B (very high throughput signal field B, VHT-SIG-B), and a data (data) field.

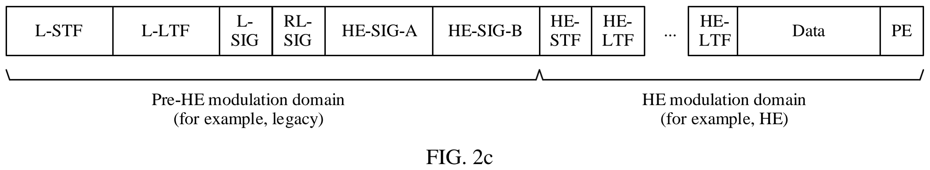

FIG. 2c shows a frame structure of a PPDU in a high efficiency (high efficiency, HE) mode in the 802.11ax protocol. As shown in FIG. 2c, a legacy preamble (for example, an L-STF and an L-LTF), legacy signal fields (for example, an L-SIG field and a repeated legacy signal field (repeated legacy signal field, RL-SIG)), a high efficiency signal field A (high efficiency signal field A, HE-SIG-A), and a high efficiency signal field B (high efficiency signal field B, HE-SIG-B) are referred to as a pre-HE modulation field. A high efficiency short training field (high efficiency short training field, HE-STF), a high efficiency long training field (high efficiency long training field, HE-LTF), and a data (data) field are referred to as an HE modulation domain.

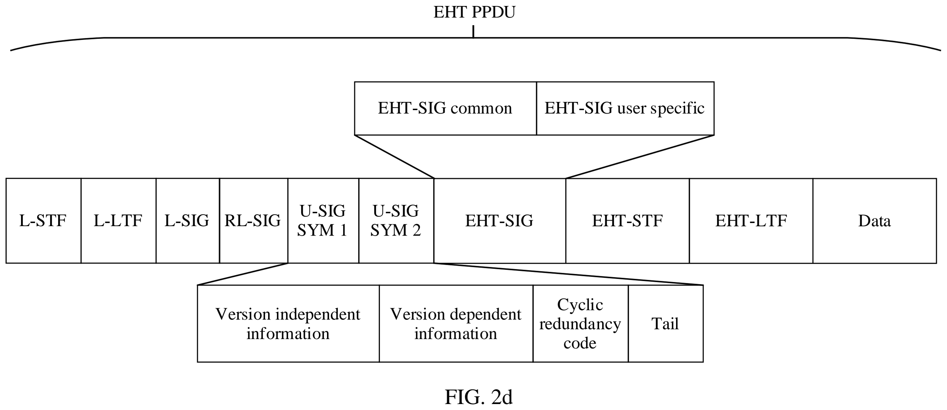

FIG. 2d shows a frame structure of an extremely high throughput (extremely high throughput, EHT) PPDU in the 802.11be protocol. The EHT PPDU includes three parts: a legacy preamble (legacy preamble, L-preamble), an extremely high throughput preamble (extremely high throughput preamble, EHT-preamble), and a physical layer convergence protocol service data unit (physical layer convergence protocol service data unit, PSDU). For example, the L-preamble part includes an L-STF, an L-LTF, and an L-SIG field. The EHT-preamble part includes an RL-SIG field, a universal signal (universal SIG, U-SIG) field, an extremely high throughput signal (EHT-SIG) field, an extremely high throughput short training field (extremely high throughput short training field, EHT-STF), an extremely high throughput long training field (extremely high throughput long training field, EHT-LTF). The PSDU part includes a data (data) field, and the like. The U-SIG field may occupy two OFDM symbols, for example, a U-SIG symbol 1 (U-SIG symbol, U-SIG SYM 1) and a U-SIG symbol SYM 1 shown in FIG. 2d. The U-SIG field may include a version independent information (version independent info) field, a version dependent information (version dependent info) field, a cyclic redundancy code (cyclic redundancy code, CRC) field, and a tail field.

For the PPDUs shown in FIG. 2a to FIG. 2d, further refer to a related standard or protocol. Details are not described again in embodiments of this application. A frame format of a PPDU in a high frequency band protocol is not limited in embodiments of this application.

5. Signal carried on a pilot subcarrier

The signal carried on the pilot subcarrier may be determined based on a quantity of pilot subcarriers and a pilot value (pilot value). For example, the quantity of pilot subcarriers is $X,$ and pilot values may be $\Psi_0$, $\Psi_1$, $\Psi_2$, $\Psi_3$, ..., and $\Psi_X$, where $X$ is a positive integer. For example, $\Psi_0$ to $\Psi_X$ may also be referred to as initial pilot values, reference pilot values, pilot values for determining pilot signals, or the like. A name of the pilot values is not limited in embodiments of this application. For example, for a high frequency band protocol, $X$ is equal to M shown below.

For example, the signal carried on the pilot subcarrier may also be related to the quantity of pilot subcarriers, the pilot value, and an index (index) of an OFDM symbol in a data field. For related descriptions of the data field, refer to the descriptions of the PPDU in the foregoing term 4. Details are not described herein again. It may be understood that the signal carried on the pilot subcarrier may also be understood as a value of the signal carried on the pilot subcarrier, or a pilot signal, or a signal carried on the pilot subcarrier when a first communication apparatus sends a PPDU, or the like.

For example, a 20 MHz bandwidth in the 802.11ac protocol is used as an example to describe the signal carried on the pilot subcarrier. For example, a bandwidth of the PPDU is 20 MHz, and the bandwidth of the PPDU includes 64 subcarriers. For example, indexes of the 64 subcarriers may be [-32:31] in sequence, that is, 64 indexes between -32 and 31. For example, there may be 4 pilot subcarriers. For example, index values of the 4 pilot subcarriers may be [-21, -7, 7, 21] in sequence, and pilot values of the 4 pilot subcarriers may be $\Psi_0 = 1$, $\Psi_1 = 1$, $\Psi_2 = 1$, $\Psi_3 = -1$ in sequence. An index may be used to determine a location of a subcarrier or a frequency of a subcarrier from the bandwidth of the PPDU. It may be understood that the indexes of the 64 subcarriers may be denoted as [-32:31], or may be denoted as between -32 and 21. The two representation manners are equivalent, and are also applicable to the following description.

The signal carried on the pilot subcarrier may be related to the index of the OFDM symbol in the data field. To be specific, if indexes of OFDM symbols in the data field in the PPDU are different, signals carried on pilot subcarriers corresponding to the OFDM symbols are different. For example, for an $n^{th}$ OFDM symbol in the data field, signals carried on pilot subcarriers [-21, -7, 7, 21] of the $n^{th}$ OFDM symbol are [$\Psi_{n\,mod\,4}$ $\Psi_{(n+1)\,mod\,4}$ $\Psi_{(n+2)\,mod\,4}$ $\Psi_{(n+3)\,mod\,4}$] in sequence. For example, an index n of a 1st OFDM symbol in the data field is 0, and signals carried on 4 pilot subcarriers corresponding to the 1st OFDM symbol are [$\Psi_0$ $\Psi_1$ $\Psi_2$ $\Psi_3$] in sequence; an index n of a 2nd OFDM symbol in the data field is 1, and signals carried on 4 pilot subcarriers corresponding to the 2nd OFDM symbol are [$\Psi_1$ $\Psi_2$ $\Psi_3$ $\Psi_0$] in sequence; an index n of a 3rd OFDM symbol in the data field is 2, and signals carried on 4 pilot subcarriers corresponding to the 3rd OFDM symbol are [$\Psi_2$ $\Psi_3$ $\Psi_0$ $\Psi_1$] in sequence; and the rest can be deduced by analogy. In other words, as the index of the OFDM symbol in the data field increases, the signals carried on the 4 pilot subcarriers corresponding to each OFDM symbol may change based on pilot values. For example, each time the index of the OFDM symbol increases by 1, the signals carried on the 4 pilot subcarriers corresponding to the OFDM symbol may be cyclically shifted for one time in sequence.

For example, after the signals carried on the 4 pilot subcarriers corresponding to each OFDM symbol in the data field are determined, the signals carried on the 4 pilot subcarriers may be further scrambled. For example, the signals carried on the pilot subcarriers may be scrambled based on a p-sequence. For example, a scrambling mode may be as follows: multiplying the signals carried on the pilot subcarriers by $p_{n+4}$, where n represents the index of the OFDM symbol in the data field, a start value of the index values of the OFDM symbol is 0, and $p_{n+4}$ represents an $(n+3)^{th}$ element in the p-sequence. 4 in the foregoing $p_{n+4}$ is related to a quantity of OFDM symbols occupied by a preamble part in the PPDU.

For example, the p-sequence may be a cyclic extension sequence including 127 elements, and the p-sequence may be used to scramble the signals carried on the pilot subcarriers, for example, $p_{0...126}$={1, 1, 1, 1, -1, -1, -1, 1, -1, -1, -1, -1, 1, 1, -1, 1, -1, -1, 1, 1, 1, -1, 1, 1,

1, 1, 1, 1, -1, 1, 1, 1, -1, 1, 1, -1, -1, 1, 1, 1, 1, -1, -1, -1, 1, -1, 1, -1, -1, 1, -1, -1, 1, 1, 1, 1, -1, -1, 1, 1, -1, -1, 1, -1, 1, -1, 1, -1, -1, -1, 1, 1, -1, -1, -1, 1, 1, -1, -1, -1, -1, 1, -1, -1, 1, -1, 1, 1, 1, 1, -1, -1, 1, -1, 1, -1, -1, -1, -1, -1, 1, -1, 1, 1, -1, 1, -1, 1, 1, 1, 1, -1, -1, 1, -1, -1, -1, 1, 1, 1, -1, -1, -1, -1, -1, -1, -1}. It may be understood that the p-sequence shown herein is merely an example. As a standard progresses, the p-sequence may change, that is, a sequence for scrambling the pilot values of the pilot subcarriers may change. Therefore, the p-sequence should not be understood as a limitation on embodiments of this application.

For example, the foregoing 4 pilot subcarriers are used as an example. When the first communication apparatus sends the PPDU, the signals carried on the 4 pilot subcarriers corresponding to the 1st OFDM symbol (n=0) in the data field are [1 1 1 -1]*$p_4$=[-1 -1 -1 1], where $p_4$ = -1; the signals carried on the 4 pilot subcarriers corresponding to the 2nd OFDM symbol (n=1) are [1 1 -1 1]*$p_5$=[-1 -1 1 -1], where $p_5$ = -1; the signals carried on the 4 pilot subcarriers corresponding to the 3rd OFDM symbol (n=2) are [1 -1 1 1]*$p_6$=[-1 1 -1 -1], where $p_6$ = -1; and the signals carried on the 4 pilot subcarriers corresponding to the 4th OFDM symbol (n=3) are [-1 1 1 1]*$p_7$-[1 -1 -1 -1], where $p_6$ = 1. The rest may be deduced by analogy. Examples are not enumerated herein.

6. Pilot values and quantity of pilot subcarriers in a bandwidth of a low frequency band PPDU

For different bandwidths, determining manners of signals carried on pilot subcarriers are similar, and a difference lies in pilot values and quantities of pilot subcarriers.

In an example, in the 802.11ac protocol, a bandwidth of a PPDU is 40 MHz, the bandwidth of the PPDU may include 6 pilot subcarriers, indexes of the 6 subcarriers are [-53, -25, -11, 11, 25, 53], and pilot values may be [1 1 1 -1 -1 1].

In another example, in the 802.11ac protocol, a bandwidth of a PPDU is 80 MHz, the bandwidth of the PPDU may include 8 pilot subcarriers, indexes of the 8 subcarriers are [-103, -75, -39, -11, 11, 39, 75, 103], and pilot values may be [1 1 1 -1 -1 1 1 1].

In still another example, in the 802.11ac protocol, a bandwidth of a PPDU is 160 MHz, the bandwidth of the PPDU may include 16 pilot subcarriers, indexes of the 16 pilot subcarriers are [-231, -203, -167, -139, -117, -89, -53, -25, 25, 53, 89, 117, 139, 167, 203, 231], and pilot values may be [1 1 1 -1 -1 1 1 1 1 1 -1 -1 1 1 1]. It may be understood that when the bandwidth of the PPDU is 160 MHz, it may be considered that the bandwidth of the PPDU is a concatenation of two 80 MHz bandwidths, and the pilot values may be considered as a concatenation of pilot values of the two 80 MHz bandwidths.

In still another example, the 802.11ax protocol supports OFDMA, and pilot configuration is performed based on RUs. For example, a 26-tone RU (an RU with 26 subcarriers) may have 2 pilot subcarriers, and pilot values may be [1, -1]. A 52-tone RU and a 106-tone RU each may have 4 pilot subcarriers, and pilot values may be [1 1 1 -1]. A 242-tone RU may have 8 pilot subcarriers, and pilot values may be [1 1 1 -1 -1 1 1 1]. A 484/996-tone RU may have 16 pilot subcarriers, and pilot values may be [1 1 1 -1 -1 1 1 1 1 1 -1 -1 1 1 1], which may be considered as concatenating two 8 pilot values. 2*996-tone RU may have 32 pilot subcarriers, and pilot values may be [1 1 1 -1 -1 1 1 1 1 1 -1 -1 1 1 1 1 1 1 -1 -1 1 1 1 1 1 1 -1 -1 1 1 1], which may be considered as concatenating four 8 pilot values.

In still another example, the 802.11be protocol supports an MRU. A 52+26-tone MRU and a 106+26-tone MRU may have 6 pilot subcarriers, and pilot values may be [1 1 1 -1 -1 1]. 3*996-tone RU may have 48 pilot subcarriers, and pilot values may be considered as concatenating six 8 pilot values. 4*996-tone RU may have 64 pilot subcarriers, and pilot values may be considered as concatenating eight 8 pilot values. Specific content of the pilot values is not described in detail one by one.

Refer to the following for a quantity of pilot subcarriers and pilot values in a bandwidth of a high frequency band PPDU. Details are not described herein.

7. Generation process of a PPDU

For a data field in the PPDU, a generation mode of a data subcarrier in the data field may include at least one of the following: pre-forward error correction physical layer padding (pre-forward error correction PHY padding, pre-FEC PHY padding), scrambling, low-density parity check (low-density parity check, LDPC) encoding (only an example), post-forward error correction physical layer padding (post-forward error correction PHY padding, post-FEC PHY padding), stream parsing, constellation mapping, LDPC tone mapping, stream cyclic shift, spatial and frequency mapping (spatial and frequency mapping), inverse discrete Fourier transform, guard interval insertion and windowing (GI insertion and windowing), analog and radio frequency (analog and RF) processing, and the like. The following describes functions of the foregoing steps by using examples. It may be understood that the following is merely examples. For a specific function, refer to a related standard or protocol. For example, the pre-FEC PHY padding refers to pre-coding padding bits appended towards a preset boundary. The scrambling is to scramble bits to increase randomness of the bits and prevent consecutive 0s or 1s. The LDPC encoding is to perform LDPC encoding. The post-FEC PHY padding refers to a quantity of post-coding bits that need to be padded towards a total quantity of bits, and that do not participate in the coding. The stream parsing is to allocate bitstreams to different spatial streams to be independently processed. The constellation mapping is to map bits to different constellation points. The LDPC tone mapping is to ensure that LDPC constellation points are sufficiently spaced apart in frequency domain. The stream cyclic shift is to multiply different spatial streams by different phase rotations to prevent unintentional beamforming. The spatial and frequency mapping is to map bits of different users to different spatial streams and subcarriers in different frequency domains.

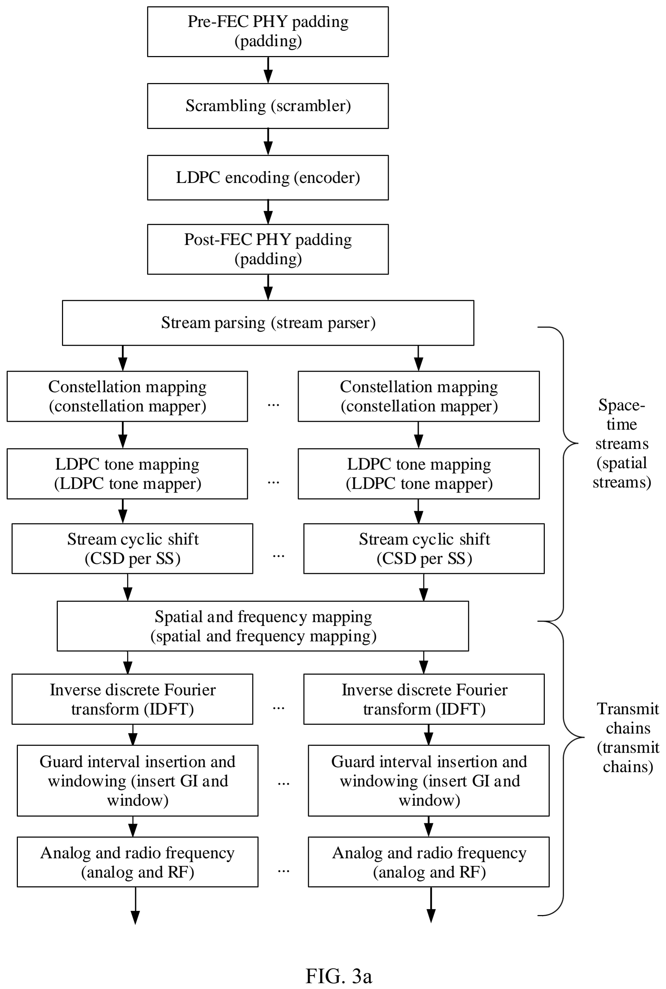

FIG. 3a is a diagram of a generation process of a PPDU according to an embodiment of this application. As shown in FIG. 3a, scrambling may be implemented by a scrambler (scrambler), LDPC encoding may be implemented by an encoder (encoder), stream parsing may be implemented by a stream parser (stream parser), constellation mapping may be implemented by a constellation mapper (constellation mapper), LDPC tone mapping may be implemented by an LDPC tone mapper (LDPC tone mapper), and stream cyclic shift may be implemented by a (CSD per SS). Optionally, before forward error correction (forward error correction, FEC) coding (pre-FEC shown in FIG. 3a), a first communication apparatus may further perform PHY padding (padding). Optionally, after FEC (post-FEC shown in FIG. 3a), the first communication apparatus may further perform PHY padding. It may be understood that steps before spacial and frequency mapping shown in FIG. 3a may be understood as a generation process of a data subcarrier corresponding to a data field. For a determining manner of a signal carried on a pilot subcarrier corresponding to the data field, refer to the term 5.

For example, the first communication apparatus may perform spatial and frequency mapping based on an index of the pilot subcarrier and an index of the data subcarrier. For example, the first communication apparatus may fill, in a corresponding location based on the index of the pilot subcarrier, the signal carried on the pilot subcarrier, and fill, in a corresponding location based on the index of the data subcarrier, a value carried on the data subcarrier. In addition, the first communication apparatus may further fill related values in corresponding locations based on an index of a direct current subcarrier and an index of a guard subcarrier.

For different bandwidths, a quantity of pilot subcarriers varies based on different bandwidths. Therefore, the different bandwidths, different RUs, or different MRUs correspond to different generation modes.

8. Decoding process of a PPDU

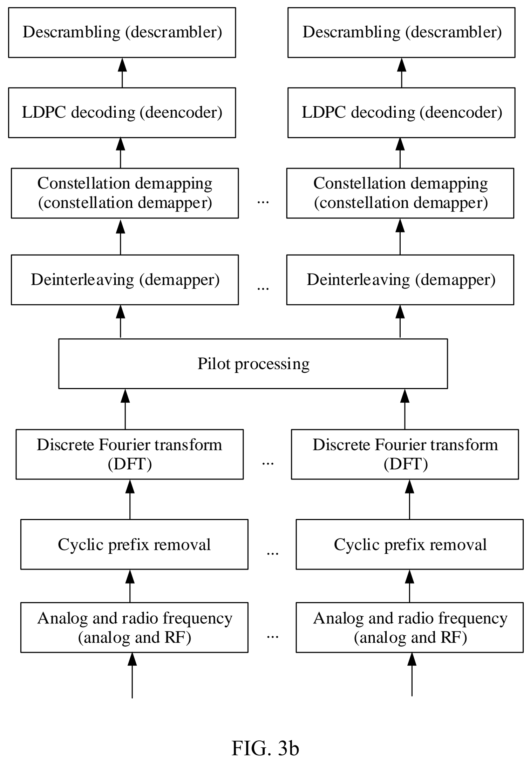

For a data field in the PPDU, a decoding scheme of a data subcarrier in the data field may include at least one of the following: analog and radio frequency processing, cyclic prefix removal, discrete Fourier transform, pilot processing, channel estimation, channel equalization, deinterleaving, constellation demapping, LDPC decoding, descrambling, and the like. For functions of the steps, refer to a related standard or protocol, or refer to related descriptions of the term 7. Details are not described herein again. FIG. 3b is a diagram of a decoding process of a PPDU according to an embodiment of this application. As shown in FIG. 3b, deinterleaving may be implemented by a demapper (demapper), constellation demapping may be implemented by a constellation demapper (constellation demapper), LDPC decoding may be implemented by a decoder (decoder), and descrambling may be implemented by a descrambler (descrambler).

It should be understood that the processes shown in FIG. 3a and FIG. 3b are merely examples. The first communication apparatus may further include more or fewer steps in the steps of generating the PPDU, and a second communication apparatus may further include more or fewer steps in the steps of decoding the PPDU. This is not limited in embodiments of this application.

9. Distribution map of RUs or MRUs

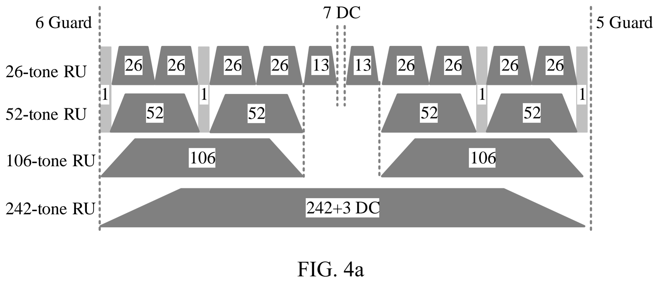

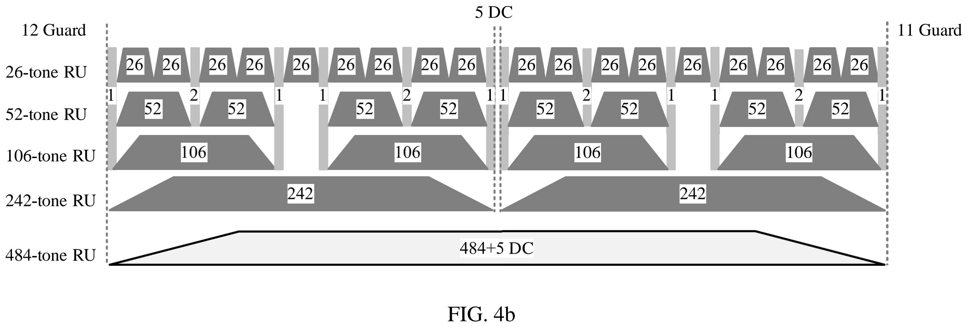

The 802.11ax protocol defines a resource unit (resource unit, RU), and the 802.11be protocol further defines a multiple resource unit (multiple RU, MRU) that includes a given plurality of RUs in a fixed combination. An RU smaller than 242 tones is referred to as a small RU (small RU), and an RU greater than or equal to 242 tones is referred to as a large RU (large RU). OFDMA transmission and non-OFDMA (non-OFDMA, that is, there is only one user in an entire bandwidth) transmission have different combinations supported by large RUs. An additional 996+484+242-tone RU is supported in the non-OFDMA transmission but not in the OFDMA transmission, and other RUs in the non-OFDMA transmission and the OFDMA transmission are the same. FIG. 4a shows a 20 MHz subcarrier tone plan and 20 MHz RU distribution. FIG. 4b shows a 40 MHz subcarrier tone plan and 40 MHz RU distribution. When a bandwidth of a PPDU is 160 MHz or 80+80 MHz, the entire bandwidth may be considered as two replications of an 80 MHz tone plan. The entire bandwidth may include an entire 2*996-tone RU, or may include various combinations of a 26-tone RU, a 52-tone RU, a 106-tone RU, a 242-tone RU, a 484-tone RU, and a 996-tone RU. When a bandwidth is 320 MHz or 160+160 MHz, the entire bandwidth may be considered as four replications of an 80 MHz tone plan.

For descriptions of the RU or the MRU, refer to a related protocol or standard. For the RU shown in FIG. 4a, refer to related descriptions of FIG. 27-5 in 802.11ax-2021. For the RU shown in FIG. 4b, refer to related descriptions of FIG. 27-6 in 802.11ax-2021. Details are not described in embodiments of this application again. For related descriptions of the RU or the MRU, refer to related descriptions of FIG. 36-4 to FIG. 36-16 in 802.11be D3.0. Details are not described again in embodiments of this application. For example, the MRU may include a 52+26-tone MRU, 106+26-tone MRU, a 996+282-tone MRU, and the like. Examples are not enumerated herein.

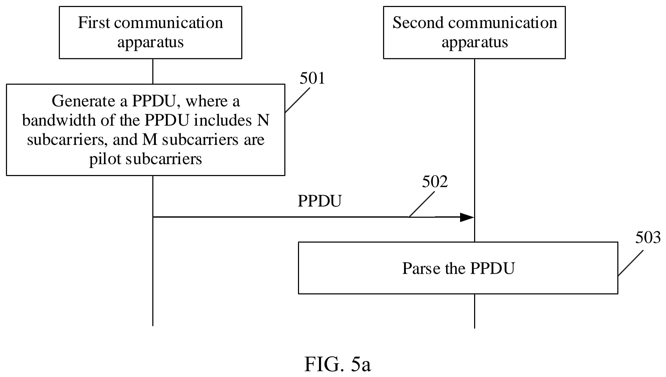

FIG. 5a is a schematic flowchart of a communication method according to an embodiment of this application. For a first communication apparatus and a second communication apparatus in the method, refer to the foregoing descriptions about the communication system. Details are not described herein again. As shown in FIG. 5a, the method includes the following steps.

501: The first communication apparatus generates a PPDU, where a bandwidth of the PPDU includes N subcarriers, and M subcarriers are pilot subcarriers.

For example, the PPDU shown in step 501 may also be referred to as a high frequency band PPDU, a high frequency PPDU, a high frequency band signal, or the like. For ease of description, the PPDU shown in step 501 is described by using a high frequency band PPDU as an example.

The high frequency band PPDU may include a data field, and the data field may occupy one or more OFDM symbols. The high frequency band PPDU may further include a legacy preamble part. For example, similar to FIG. 2a to FIG. 2d, the legacy preamble part may include at least one of the following: an L-LTF, an L-STF, and an L-SIG field. For example, the high frequency band PPDU may include a UHR-related preamble part. For example, the UHR-related preamble part may include at least one of the following: a UHR-SIG field, a UHR-LTF, and a UHR-STF. It may be understood that names of the UHR-SIG field, the UHR-LTF, and the UHR-STF shown herein are shown by using UHR as an example, and should not be construed as a limitation on embodiments of this application.

It may be understood that, for a frame format of the high frequency band PPDU, refer to a frame format shown in another protocol, for example, frame formats shown in protocols such as 802.11bn, 802.11ay, and 802.11aj. A specific frame format of the high frequency band PPDU is not limited in this embodiment of this application.

A high frequency band may be understood as a frequency band between 42.5 GHz and 71 GHz, or a frequency band greater than or equal to (super) 45 GHz. A specific frequency band value related to the high frequency band is not limited in this embodiment of this application.

The bandwidth of the high frequency band PPDU may be greater than or equal to 160 MHz. For example, the bandwidth of the high frequency band PPDU may be any one of the following: 160 MHz, 320 MHz, 640 MHz, 1280 MHz, and 2560 MHz. The bandwidth of the high frequency band PPDU listed herein is merely an example, and should not be construed as a limitation on this embodiment of this application. For example, when N=128 and a subcarrier spacing is 2.5 MHz, the bandwidth of the high frequency band PPDU is 320 MHz. For another example, when N=128 and a subcarrier spacing is 5 MHz, the bandwidth of the high frequency band PPDU is 640 MHz.

In this embodiment of this application, the bandwidth of the high frequency band PPDU includes N subcarriers, where M subcarriers are pilot subcarriers. For example, the N subcarriers and the M pilot subcarriers may be for the data field in the high frequency band PPDU. For example, for the data field in the high frequency band PPDU, the bandwidth of the high frequency band PPDU includes the N subcarriers, and the N subcarriers include the M pilot subcarriers. A value of M/N may meet the following features.

In an example, when N is 128, M is greater than 6.

In another example, when N is 64, M is greater than 4.

In still another example, when N is 256, M is greater than 8.

For example, a value of M may be greater than a quantity of pilot subcarriers that are in a bandwidth of a low frequency band PPDU and that correspond to the N subcarriers. For example, the quantity of pilot subcarriers enumerated in the term 6 is used as an example. The bandwidth of the low frequency band PPDU is 40 MHz (for example, N=128), a quantity of pilot subcarriers in 40 MHz is 6, and M may be an integer greater than 6. For another example, the bandwidth of the low frequency band PPDU is 80 MHz (for example, N=256), a quantity of pilot subcarriers in 80 MHz is 8, and M may be an integer greater than 8. For another example, the bandwidth of the low frequency band PPDU is 160 MHz (for example, N=512), a quantity of pilot subcarriers in 160 MHz is 16, and M may be an integer greater than 16. Specific values of M and N are not enumerated in embodiments of this application. For a relationship between N, the subcarrier spacing, and the bandwidth of the high frequency band PPDU, refer to related descriptions of the foregoing term 2 and term 3. Details are not described herein again. The following uses an example in which N=128 and M is greater than 6 for description.

A subcarrier related to the bandwidth of the high frequency band PPDU meets at least one of the following examples.

In an example, a quantity of pilot subcarriers in the bandwidth of the high frequency band PPDU is any one of the following: 8, 10, 12, 14, 16, 18, and 20.

The quantity of pilot subcarriers in the bandwidth of the high frequency band PPDU shown in this embodiment of this application can effectively ensure that the second communication apparatus (a receive-side communication apparatus) has an enough quantity of pilots to correct a frequency offset, thereby improving accuracy of data demodulation. In this way, a packet error rate can be reduced and link performance can be improved. For example, the quantity of pilot subcarriers in the bandwidth of the high frequency band PPDU is greater than the quantity of pilot subcarriers in the bandwidth of the low frequency band PPDU. Therefore, a proportion of erroneous PPDUs received by the second communication apparatus in the high frequency band can be effectively reduced, and the packet error rate can be reduced.

In an example, a quantity of data subcarriers in the bandwidth of the high frequency band PPDU is less than 108. For example, the quantity of data subcarriers in the bandwidth of the high frequency band PPDU may be any one of the following: 102 and 72. The quantity of data subcarriers in the bandwidth of the high frequency band PPDU may be a quantity of data subcarriers in an RU or an MRU. A total quantity of subcarriers included in the RU or the MRU is less than 242. For example, a quantity of data subcarriers in a 106-tone RU is 102, and the quantity of data subcarriers in the bandwidth of the high frequency band PPDU may be designed as 102. In this way, when generating signals carried on the data subcarriers in the PPDU, the communication apparatus may reuse a generation mode/generation circuit of signals carried on the data subcarriers in the 106-tone RU, thereby improving baseband chip utilization and reducing costs. For another example, a quantity of data subcarriers in a 52+26-tone MRU is 72, and the quantity of data subcarriers in the bandwidth of the high frequency band PPDU may also be designed as 72. In this way, when generating signals carried on the data subcarriers in the PPDU, the communication apparatus may reuse a generation mode/generation circuit of signals carried on the data subcarriers in the 52+26-tone MRU. The quantity of data subcarriers in the bandwidth of the high frequency band PPDU in this embodiment of this application may alternatively be considered to be designed as a quantity of data subcarriers in another RU or another MRU, which is not limited to the 106-tone RU and the 52+26-tone MRU, so that a generation mode/generation circuit of a signal carried on a data subcarrier in an existing RU/MRU can be reused, thereby improving the baseband utilization and reducing chip costs.

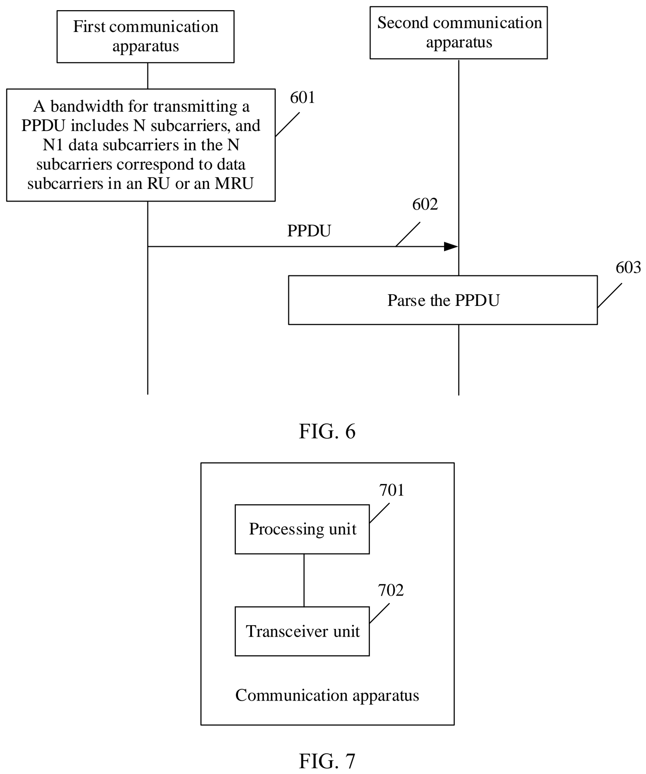

For descriptions of a relationship between the quantity of data subcarriers in the bandwidth of the high frequency band PPDU, the quantity of pilot subcarriers, and the RU or the MRU, refer to content in the following embodiment corresponding to FIG. 6.

In this embodiment of this application, a quantity of guard subcarriers in the bandwidth of the high frequency band PPDU is less than or equal to 11. For example, the quantity of guard subcarriers in the bandwidth of the high frequency band PPDU may be any one of the following: 3, 5, 7, 9, and 11.

The quantity of pilot subcarriers and the quantity of data subcarriers in the bandwidth of the high frequency band PPDU can be ensured by properly designing the quantity of guard subcarriers. For example, in comparison with the bandwidth of the low frequency band PPDU, in the bandwidth of the high frequency band PPDU, the quantity of guard subcarriers is reduced, and the quantity of pilot subcarriers is increased, thereby effectively improving spectrum utilization.

For a tone plan, the quantity of pilot subcarriers and indexes of the pilot subcarriers, the quantity of data subcarriers and indexes of the data subcarriers, the quantity of guard subcarriers and indexes of the guard subcarriers, and the like of the bandwidth of the high frequency band PPDU, refer to an implementation 1 to an implementation 6. Content of the following implementation 1 to implementation 6 is applicable to this embodiment.

For example, an access mode of the high frequency band PPDU may be a non-OFDMA access mode (or referred to as a transmission mode). The access mode of the high frequency band PPDU is not limited in this embodiment of this application.

502: The first communication apparatus transmits the PPDU in the high frequency band, and correspondingly, the second communication apparatus receives the PPDU in the high frequency band.

In step 502, transmitting the PPDU in the high frequency band is sending the high frequency band PPDU in the high frequency band.

503: The second communication apparatus parses the PPDU.

In step 503, parsing the PPDU is parsing the high frequency band PPDU. For example, the second communication apparatus detects (detects) the legacy preamble part of the high frequency band PPDU, to obtain a version to which the high frequency band PPDU belongs, for example, obtain the frame format corresponding to the high frequency band PPDU, or obtain that the high frequency band PPDU is a UHR PPDU. By detecting preamble parts (for example, including the legacy preamble part and the UHR-related preamble part) of the high frequency band PPDU, the second communication apparatus can effectively demodulate the data field in the high frequency band PPDU. A specific description manner of step 503 is not limited in this embodiment of this application. For example, step 503 may alternatively be replaced with the following: The second communication apparatus detects the high frequency band PPDU, or the second communication apparatus processes the high frequency band PPDU, or the second communication apparatus detects and demodulates the high frequency band PPDU, or the like.

For descriptions of parsing the high frequency band PPDU by the second communication apparatus, refer to FIG. 3b or the following. Details are not described herein.

In this embodiment of this application, the quantity of pilot subcarriers in the bandwidth of the high frequency band PPDU is properly designed, to effectively reduce the packet error rate, and improve link performance. In addition, the second communication apparatus may further have the enough quantity of pilots to correct the frequency offset, to improve the accuracy of the data demodulation performed by the second communication apparatus.

The following describes in detail subcarriers included in the bandwidth of the high frequency band PPDU. It may be understood that quantities of subcarriers, indexes of the subcarriers, and the like described below are all shown by using an example in which the bandwidth of the high frequency band PPDU includes the 128 subcarriers. Each manner in the following implementation 1 to implementation 6 may be a separate embodiment, or different content in a same implementation may be combined. For example, a quantity of pilot subcarriers and pilot values in the implementation 1 may be combined. For another example, pilot values and a tone plan (tone plan) in the implementation 1 may also be combined. Certainly, the content may alternatively be a separate embodiment. Descriptions of the separate embodiment and descriptions of a combined embodiment herein are also applicable to the implementation 2 to the implementation 6. Details are not described in the following.

Implementation 1

In an example, a quantity of pilot subcarriers is 10, and pilot values may be [1 1 1 -1 - 1 1 1 1 1 -1] or [1 1 1 -1 1 1 1 -1 -1 1], for example, $\Psi_0 = 1$, $\Psi_1 = 1$, $\Psi_2 = 1$, $\Psi_3 = -1$, $\Psi_4 = -1$, $\Psi_5 = 1$, $\Psi_6 = 1$, $\Psi_7 = 1$, $\Psi_8 = 1$, and $\Psi_9 = -1$; or $\Psi_0 = 1$, $\Psi_1 = 1$, $\Psi_2 = 1$, $\Psi_3 = -1$, $\Psi_4 = 1$, $\Psi_5 = 1$, $\Psi_6 = 1$, $\Psi_7 = -1$, $\Psi_8 = -1$, and $\Psi_9 = 1$. For example, pilot values of the pilot subcarriers in the bandwidth of the high frequency band PPDU may be obtained by concatenating pilot values of pilot subcarriers in a bandwidth of a low frequency band PPDU. For example, the pilot values of the 10 pilot subcarriers may be a concatenation of 6 pilot values (for example, [1 1 1 -1 -1 1]) in a low frequency band and 4 pilot values (for example, [1 1 1 -1]) in a low frequency band. For example, the 6 pilot values in the low frequency band may be 6 pilot values in an 802.11ac 40 MHz bandwidth, an 802.11ax 52+26-tone MRU, or an 802.11ax 106+26-tone MRU. For another example, the 4 pilot values in the low frequency band may be 4 pilot values in an 802.11ac 20 MHz bandwidth or an 802.11ax 52-tone RU/106-tone RU.

In another example, a quantity of pilot subcarriers is 10, and pilot values of the pilot subcarriers may be [1 1 1 -1 -1 1 1 1 1 -1] or [1 -1 1 1 1 -1 -1 1 1 1], where $\Psi_0 = 1$, $\Psi_1 = 1$, $\Psi_2 = 1$, $\Psi_3 = -1$, $\Psi_4 = -1$, $\Psi_5 = 1$, $\Psi_6 = 1$, $\Psi_7 = 1$, $\Psi_8 = 1$, and $\Psi_9 = -1$; or $\Psi_0 = 1$, $\Psi_1 = -1$, $\Psi_2 = 1$, $\Psi_3 = 1$, $\Psi_4 = 1$, $\Psi_5 = -1$, $\Psi_6 = -1$, $\Psi_7 = 1$, $\Psi_8 = 1$, and $\Psi_9 = 1$. For example, pilot values of the pilot subcarriers in the bandwidth of the high frequency band PPDU may be obtained by concatenating pilot values of pilot subcarriers in a bandwidth of a low frequency band PPDU. For example, the pilot values of the 10 pilot subcarriers may be a concatenation of 8 pilot values (for example, [1 1 1 -1 -1 1 1 1]) in a low frequency band and 2 pilot values (for example, [1 -1]) in a low frequency band. For example, the 8 pilot values in the low frequency band may be 8 pilot values in an 802.11ac 80 MHz bandwidth or an 802.11ax 242-tone RU. For another example, the 2 pilot values in the low frequency band may be 2 pilot values in an 802.11ax 26-tone RU.

For example, the tone plan of the bandwidth of the high frequency band PPDU may be shown as follows.

The quantity of data subcarriers is 102, a quantity of direct current subcarriers is 5, the quantity of pilot subcarriers is 10, and the quantity of guard subcarriers is 11. The guard subcarriers are distributed on the leftmost side and the rightmost side of the entire bandwidth. 6 guard subcarriers are on the leftmost side, and indexes may be denoted as [-64:-59]; and 5 guard subcarriers are on the rightmost side, and indexes may be denoted as [59:63]. The tone plan shown herein may alternatively be understood as follows: The bandwidth of the PPDU is 320 MHz, 640 MHz, or the like; a total quantity of subcarriers of the 320 MHz PPDU or the 640 MHz PPDU is 128; and indexes are integers from -64 to 63, and are denoted as [-64:63]. The subcarriers include 102 data subcarriers, 5 direct current subcarriers, 10 pilot subcarriers, and 11 guard subcarriers. Indexes of the 11 guard subcarriers are [-64:-59] and [59:63]. Similar descriptions are also provided in the following implementation 2 to implementation 6, and are not enumerated in the following.

For example, locations (that is, indexes) of pilot subcarriers may meet that positive and negative frequencies are symmetrical, and the pilot subcarriers are evenly or approximately evenly distributed in the entire bandwidth. A setting rule of the pilot subcarriers shown herein is merely an example, and should not be construed as a limitation on this embodiment of this application. For example, for a positive frequency part, in ascending order of indexes, an index of a $1^{st}$ pilot subcarrier is between [2:11] (which may also be referred to as between 2 and 11), an index of a $2^{nd}$ pilot subcarrier is between [12:21], an index of a $3^{rd}$ pilot subcarrier is between [22:31], an index of a $4^{th}$ pilot subcarrier is between [32:41], and an index of a $5^{th}$ pilot subcarrier is between [42:53]. For example, for a negative frequency part, in descending order of indexes, an index of a $1^{st}$ pilot subcarrier is between [-11:-2], an index of a $2^{nd}$ pilot subcarrier is between [-21:-12], an index of a $3^{rd}$ pilot subcarrier is between [-31:-22], an index of a $4^{th}$ pilot subcarrier is between [-41:-32], and an index of a $5^{th}$ pilot subcarrier is between [-53:-42]. Herein, [2:11] indicates that an index of a pilot subcarrier may fall within the limited range, and the other indications are deduced by analogy. Details are not described again.

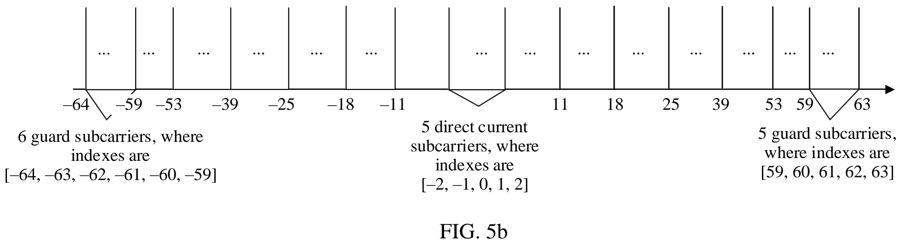

As shown in FIG. 5b, for example, when a quantity of pilot subcarriers is 10, a positive frequency part and a negative frequency part each include 5 subcarriers symmetrically, and indexes of the pilot subcarriers may be [-53, -39, -25, -18, -11, 11, 18, 25, 39, 53]. It may be understood that indexes of data subcarriers are not shown in FIG. 5b one by one. Indexes of horizontal coordinates in FIG. 5b to FIG. 5f increase sequentially from left to right.

Implementation 2

In an example, a quantity of pilot subcarriers is 12, and pilot values may be [1 1 1 -1 - 1 1 1 1 1 -1 -1 1], for example, $\Psi_0 = 1, \Psi_1 = 1, \Psi_2 = 1, \Psi_3 = -1, \Psi_4 = -1, \Psi_5 = 1, \Psi_6 = 1, \Psi_7 = 1, \Psi_8 = 1, \Psi_9 = -1, \Psi_{10} = -1,$ and $\Psi_{11} = 1$. For example, the pilot values of the 12 pilot subcarriers may be a concatenation of two 6 pilot values (for example, [1 1 1 -1 -1 1]) in a low frequency band.

In another example, a quantity of pilot subcarriers is 12, and pilot values may be [1 1 1 -1 -1 1 1 1 1 1 1 -1],

or [1 1 1 -1 1 1 1 -1 -1 1 1 1], for example, $\Psi_0 = 1, \Psi_1 = 1, \Psi_2 = 1, \Psi_3 = -1, \Psi_4 = -1, \Psi_5 = 1, \Psi_6 = 1, \Psi_7 = 1, \Psi_8 = 1, \Psi_9 = 1, \Psi_{10} = 1,$ and $\Psi_{11} = -1$; or $\Psi_0 = 1, \Psi_1 = 1, \Psi_2 = 1, \Psi_3 = -1, \Psi_4 = 1, \Psi_5 = 1, \Psi_6 = 1, \Psi_7 = -1, \Psi_8 = -1, \Psi_9 = 1, \Psi_{10} = 1,$ and $\Psi_{11} = 1$. For example, the 12 pilot values may be a concatenation of 8 pilot values (for example, [1 1 1 -1 -1 1 1 1]) and 4 pilot values (for example, [1 1 1 -1]) that are in a low frequency band, or a concatenation of 4 pilot values and 8 pilot values that are in a low frequency band.

For example, the tone plan of the bandwidth of the high frequency band PPDU may be shown as follows.

In an example, the quantity of data subcarriers is 102, a quantity of direct current subcarriers is 3, the quantity of pilot subcarriers is 12, and the quantity of guard subcarriers is 11. The guard subcarriers are distributed on the leftmost side and the rightmost side of the entire bandwidth. 6 guard subcarriers are on the leftmost side, and indexes may be denoted as [-64:-59]; and 5 guard subcarriers are on the rightmost side, and indexes may be denoted as [59:63].

In another example, the quantity of data subcarriers is 102, a quantity of direct current subcarriers is 5, the quantity of pilot subcarriers is 12, and the quantity of guard subcarriers is 9. The guard subcarriers are distributed on the leftmost side and the rightmost side of the entire bandwidth. 5 guard subcarriers are on the leftmost side, and indexes may be denoted as [-64:-60]; and 4 guard subcarriers are on the rightmost side, and indexes may be denoted as [60:63].

For example, locations of pilot subcarriers may meet that positive and negative frequencies are symmetrical, and the pilot subcarriers are evenly or approximately evenly distributed in the entire bandwidth. For example, when the quantity of pilot subcarriers is 12, a positive frequency part and a negative frequency part each include 6 subcarriers symmetrically. For the positive frequency part, in ascending order of index values, an index value of a $1^{st}$ pilot subcarrier is between [2:10], an index value of a $2^{nd}$ pilot subcarrier is between [11:19], an index value of a $3^{rd}$ pilot subcarrier is located between [20:28], an index value of a $4^{th}$ pilot subcarrier is located between [29:37], an index value of a $5^{th}$ pilot subcarrier is located between [38:46], and an index value of a $6^{th}$ pilot subcarrier is located between [47:55]. For the negative frequency part, in descending order of index values, an index value of a $1^{st}$ pilot subcarrier is between [-10:-2], an index value of a $2^{nd}$ pilot subcarrier is between [-19:-11], an index value of a $3^{rd}$ pilot subcarrier is located between [-28:-20], an index value of a $4^{th}$ pilot subcarrier is located between [-37:-29], an index value of a $5^{th}$ pilot subcarrier is located between [-46:-38], and an index value of a $6^{th}$ pilot subcarrier is located between [-55:-47]. Herein, [2:10] indicates that an index of a pilot subcarrier may fall within the limited range, and the other indications are deduced by analogy. Details are not described again.

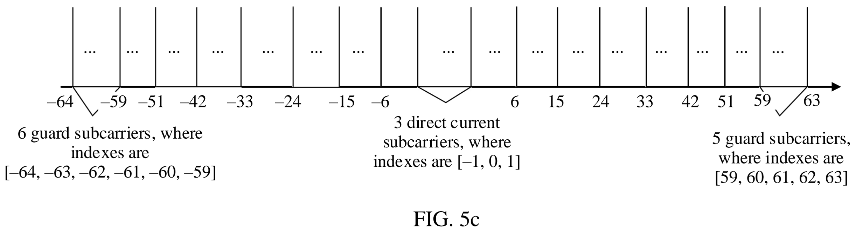

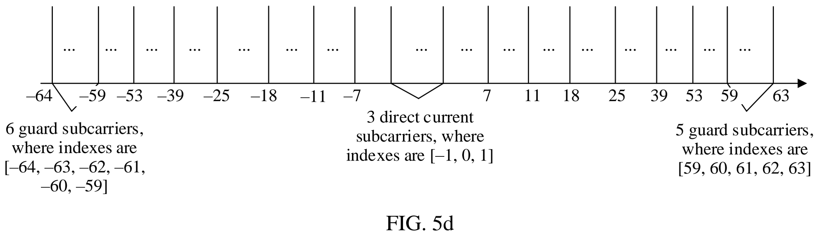

For example, when a quantity of pilot subcarriers is 12, as shown in FIG. 5c, indexes of the pilot subcarriers may be [-51, -42, -33, -24, -15, -6, 6, 15, 24, 33, 42, 51]; and as shown in FIG. 5d, indexes of the pilot subcarriers may alternatively be [-53, -39, -25, -18, -11, -7, 7, 11, 18, 25, 39, 53]. It may be understood that direct current subcarriers and guard subcarriers shown in FIG. 5c and FIG. 5d are merely examples, and should not be construed as a limitation on this embodiment of this application.

Implementation 3

For example, a quantity of pilot subcarriers is 14, and pilot values may be [1 1 1 -1 -1 1 1 1 1 1 -1 -1 1] or [1 1 1 -1 -1 1 1 1 1 -1 -1 1 1 1], for example, $\Psi_0 = 1$, $\Psi_1 = 1$, $\Psi_2 = 1$, $\Psi_3 = -1$, $\Psi_4 = -1$, $\Psi_5 = 1$, $\Psi_6 = 1$, $\Psi_7 = 1$, $\Psi_8 = 1$, $\Psi_9 = 1$, $\Psi_{10} = 1$, $\Psi_{11} = -1$, $\Psi_{12} = -1$, and $\Psi_{13} = 1$; or $\Psi_0 = 1$, $\Psi_1 = 1$, $\Psi_2 = 1$, $\Psi_3 = -1$, $\Psi_4 = -1$, $\Psi_5 = 1$, $\Psi_6 = 1$, $\Psi_7 = 1$, $\Psi_8 = 1$, $\Psi_9 = -1$, $\Psi_{10} = -1$, $\Psi_{11} = 1$, $\Psi_{12} = 1$, and $\Psi_{13} = 1$. For example, the 14 pilot values may be a concatenation of 8 pilot values (for example, [1 1 1 -1 -1 1 1 1]) and 6 pilot values (for example, [1 1 1 -1 -1 1]) that are in a low frequency band, or a concatenation of 6 pilot values and 8 pilot values that are in a low frequency band.

For example, the tone plan of the bandwidth of the high frequency band PPDU may be shown as follows.

In an example, the quantity of data subcarriers is 102, a quantity of direct current subcarriers is 3, the quantity of pilot subcarriers is 14, and the quantity of guard subcarriers is 9. The guard subcarriers are distributed on the leftmost side and the rightmost side of the entire bandwidth. 5 guard subcarriers are on the leftmost side, and indexes may be denoted as [-64:-60]; and 4 guard subcarriers are on the rightmost side, and indexes may be denoted as [60:63].

In another example, the quantity of data subcarriers is 102, a quantity of direct current subcarriers is 5, the quantity of pilot subcarriers is 14, and the quantity of guard subcarriers is 7. The guard subcarriers are distributed on the leftmost side and the rightmost side of the entire bandwidth. 4 guard subcarriers are on the leftmost side, and indexes may be denoted as [-64:-61]; and 3 guard subcarriers are on the rightmost side, and indexes may be denoted as [61:63].

In still another example, the quantity of data subcarriers is 102, a quantity of direct current subcarriers is 1, the quantity of pilot subcarriers is 14, and the quantity of guard subcarriers is 11. The guard subcarriers are distributed on the leftmost side and the rightmost side of the entire bandwidth. 6 guard subcarriers are on the leftmost side, and indexes may be denoted as [-64:-59]; and 5 guard subcarriers are on the rightmost side, and indexes may be denoted as [59:63].

For example, when the quantity of pilot subcarriers is 14, a positive frequency part and a negative frequency part each include 7 subcarriers symmetrically. For the positive frequency part, in ascending order of index values, an index value of a 1st pilot subcarrier is between [2:9], an index value of a 2nd pilot subcarrier is between [10:17], an index value of a 3rd pilot subcarrier is located between [18:25], an index value of a 4th pilot subcarrier is located between [26:33], an index value of a 5th pilot subcarrier is located between [34:41], an index value of a 6th pilot subcarrier is located between [42:49], and an index value of a 7th pilot subcarrier is located between [50:57]. For the negative frequency part, in descending order of index values, an index value of a 1st pilot subcarrier is between [-9:-2], an index value of a 2nd pilot subcarrier is between [-17:-10], an index value of a 3rd pilot subcarrier is located between [-25:-18], an index value of a 4th pilot subcarrier is located between [-33:-26], an index value of a 5th pilot subcarrier is located between [-41:-34], an index value of a 6th pilot subcarrier is located between [-49:-42], and an index value of a 7th pilot subcarrier is located between [-57:-50]. Herein, [2:9] indicates that an index of a pilot subcarrier may fall within the limited range, and the other indications are deduced by analogy. Details are not described again.

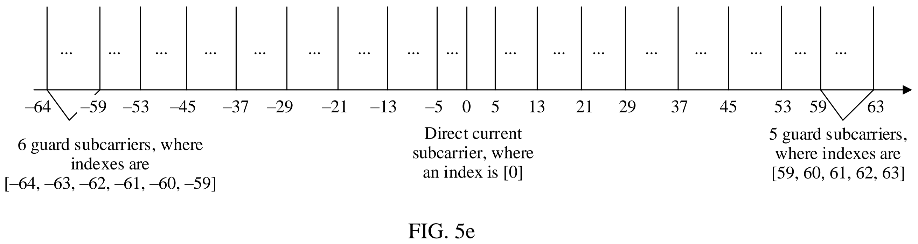

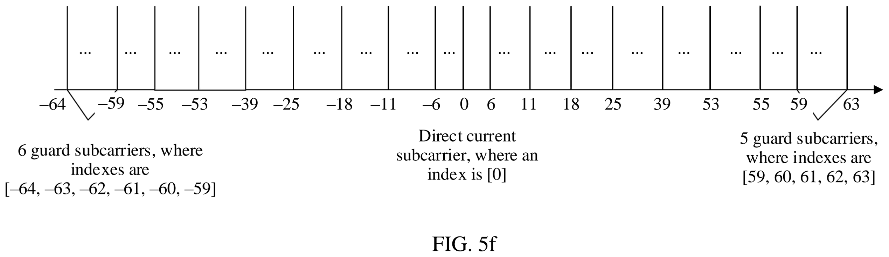

For example, when a quantity of pilot subcarriers is 14, as shown in FIG. 5e, indexes of the pilot subcarriers may be [-53 -45 -37 -29 -21 -13 -5 5 13 21 29 37 45 53]; and as shown in FIG. 5f, indexes of the pilot subcarriers may alternatively be [-55 -53 -39 -25 -18 -11 -6 6 11 18 25 39 53 55]. It may be understood that direct current subcarriers and guard subcarriers shown in FIG. 5c and FIG. 5d are merely examples, and should not be construed as a limitation on this embodiment of this application.

Implementation 4

For example, a quantity of pilot subcarriers is 16, and pilot values may be [1 1 1 -1 -1 1 1 1 1 1 1 -1 -1 1 1 1], for example, $\Psi_0 = 1$, $\Psi_1 = 1$, $\Psi_2 = 1$, $\Psi_3 = -1$, $\Psi_4 = -1$, $\Psi_5 = 1$, $\Psi_6 = 1$, $\Psi_7 = 1$, $\Psi_8 = 1$, $\Psi_9 = 1$, $\Psi_{10} = 1$, $\Psi_{11} = -1$, $\Psi_{12} = -1$, $\Psi_{13} = 1$, $\Psi_{14} = 1$, and $\Psi_{15} = 1$. For example, pilot values of the pilot subcarriers in the bandwidth of the high frequency band PPDU may be obtained by reusing pilot values of pilot subcarriers in a bandwidth of a low frequency band PPDU. For example, the 16 pilot values may be 16 pilot values in the low frequency band, for example, 16 pilot values in an 802.11ac 160 MHz bandwidth or an 802.11ax 484/996-tone RU.

For example, the tone plan of the bandwidth of the high frequency band PPDU may be shown as follows.

In an example, the quantity of data subcarriers is 102, a quantity of direct current subcarriers is 3, the quantity of pilot subcarriers is 16, and the quantity of guard subcarriers is 7. The guard subcarriers are distributed on the leftmost side and the rightmost side of the entire bandwidth. 4 guard subcarriers are on the leftmost side, and indexes may be denoted as [-64:-61]; and 3 guard subcarriers are on the rightmost side, and indexes may be denoted as [61:63].

In another example, the quantity of data subcarriers is 102, a quantity of direct current subcarriers is 5, the quantity of pilot subcarriers is 16, and the quantity of guard subcarriers is 5. The guard subcarriers are distributed on the leftmost side and the rightmost side of the entire bandwidth. 3 guard subcarriers are on the leftmost side, and indexes may be denoted as [-64:-62]; and 2 guard subcarriers are on the rightmost side, and indexes may be denoted as [62:63].

In still another example, the quantity of data subcarriers is 102, a quantity of direct current subcarriers is 1, the quantity of pilot subcarriers is 16, and the quantity of guard subcarriers is 9. The guard subcarriers are distributed on the leftmost side and the rightmost side of the entire bandwidth. 5 guard subcarriers are on the leftmost side, and indexes may be denoted as [-64:-60]; and 4 guard subcarriers are on the rightmost side, and indexes may be denoted as [60:63].

For the implementation 3 and the implementation 4, when the quantity of pilot subcarriers is 12 or 14, the packet error rate can be effectively and significantly reduced. As the quantity of pilot subcarriers increases, the packet error rate is only reduced to some extent.

Implementation 5

For example, a quantity of pilot subcarriers is 18, and pilot values may be [1 1 1 -1 -1 1 1 1 1 1 1 -1 -1 1 1 1 1 -1] or [1 -1 1 1 1 -1 -1 1 1 1 1 1 1 -1 -1 1 1 1], for example, $\Psi_0 = 1$, $\Psi_1 = 1$, $\Psi_2 = 1$, $\Psi_3 = -1$, $\Psi_4 = -1$, $\Psi_5 = 1$, $\Psi_6 = 1$, $\Psi_7 = 1$, $\Psi_8 = 1$, $\Psi_9 = 1$, $\Psi_{10} = 1$, $\Psi_{11} = -1$, $\Psi_{12} = -1$, $\Psi_{13} = 1$, $\Psi_{14} = 1$, $\Psi_{15} = 1$, $\Psi_{16} = 1$ and $\Psi_{17} = -1$; or $\Psi_0 = 1$, $\Psi_1 = -1$, $\Psi_2 = 1$, $\Psi_3 = 1$, $\Psi_4 = 1$, $\Psi_5 = -1$, $\Psi_6 = -1$, $\Psi_7 = 1$, $\Psi_8 = 1$, $\Psi_9 = 1$, $\Psi_{10} = 1$, $\Psi_{11} = 1$, $\Psi_{12} = 1$, $\Psi_{13} = -1$, $\Psi_{14} = -1$, $\Psi_{15} = 1$, $\Psi_{16} = 1$, and $\Psi_{17} = 1$. For example, the 18 pilot values may be a concatenation of 16 pilot values and 2 pilot values that are in a low frequency band, or a concatenation of 2 pilot values and 16 pilot values that are in a low frequency band.

For example, the tone plan of the bandwidth of the high frequency band PPDU may be shown as follows.

In an example, the quantity of data subcarriers is 102, a quantity of direct current subcarriers is 3, the quantity of pilot subcarriers is 18, and the quantity of guard subcarriers is 5. The guard subcarriers are distributed on the leftmost side and the rightmost side of the entire bandwidth. 3 guard subcarriers are on the leftmost side, and indexes may be denoted as [-64:-62]; and 2 guard subcarriers are on the rightmost side, and indexes may be denoted as [62:63].

In another example, the quantity of data subcarriers is 102, a quantity of direct current subcarriers is 5, the quantity of pilot subcarriers is 18, and the quantity of guard subcarriers is 3. The guard subcarriers are distributed on the leftmost side and the rightmost side of the entire bandwidth. 2 guard subcarriers are on the leftmost side, and indexes may be denoted as [-64:-63]; and 1 guard subcarrier is on the rightmost side, and an index may be denoted as [63].

In still another example, the quantity of data subcarriers is 102, a quantity of direct current subcarriers is 1, the quantity of pilot subcarriers is 18, and the quantity of guard subcarriers is 7. The guard subcarriers are distributed on the leftmost side and the rightmost side of the entire bandwidth. 4 guard subcarriers are on the leftmost side, and indexes may be denoted as [-64:-61]; and 3 guard subcarriers are on the rightmost side, and indexes may be denoted as [61:63].

Implementation 6

For example, a quantity of pilot subcarriers is 20, and pilot values may be [1 1 1 -1 -1 1 1 1 1 1 -1 -1 1 1 1 1 1 1 1 -1] or [1 1 1 -1 1 1 1 -1 -1 1 1 1 1 1 1 -1 -1 1 1 1], for example, $\Psi_0 = 1$, $\Psi_1 = 1$, $\Psi_2 = 1$, $\Psi_3 = -1$, $\Psi_4 = -1$, $\Psi_5 = 1$, $\Psi_6 = 1$, $\Psi_7 = 1$, $\Psi_8 = 1$, $\Psi_9 = 1$, $\Psi_{10} = 1$, $\Psi_{11} = -1$, $\Psi_{12} = -1$, $\Psi_{13} = 1$, $\Psi_{14} = 1$, $\Psi_{15} = 1$, $\Psi_{16} = 1$, $\Psi_{17} = 1$, $\Psi_{18} = 1$, and $\Psi_{19} = -1$; or $\Psi_0 = 1$, $\Psi_1 = 1$, $\Psi_2 = 1$, $\Psi_3 = -1$, $\Psi_4 = 1$, $\Psi_5 = 1$, $\Psi_6 = 1$, $\Psi_7 = -1$, $\Psi_8 = -1$, $\Psi_9 = 1$, $\Psi_{10} = 1$, $\Psi_{11} = 1$, $\Psi_{12} = 1$, $\Psi_{13} = 1$, $\Psi_{14} = 1$, $\Psi_{15} = -1$, $\Psi_{16} = -1$, $\Psi_{17} = 1$, $\Psi_{18} = 1$, and $\Psi_{19} = 1$. For example, the 20 pilot values may be a concatenation of 16 pilot values and 4 pilot values that are in a low frequency band, or a concatenation of 4 pilot values and 16 pilot values that are in a low frequency band.

For example, the tone plan of the bandwidth of the high frequency band PPDU may be shown as follows.

In an example, the quantity of data subcarriers is 102, a quantity of direct current subcarriers is 3, the quantity of pilot subcarriers is 20, and the quantity of guard subcarriers is 3. The guard subcarriers are distributed on the leftmost side and the rightmost side of the entire bandwidth. 2 guard subcarriers are on the leftmost side, and indexes may be denoted as [-64:-63]; and 1 guard subcarrier is on the rightmost side, and an index may be denoted as [63].

In another example, the quantity of data subcarriers is 102, a quantity of direct current subcarriers is 1, the quantity of pilot subcarriers is 20, and the quantity of guard subcarriers is 5. The guard subcarriers are distributed on the leftmost side and the rightmost side of the entire bandwidth. 3 guard subcarriers are on the leftmost side, and indexes may be denoted as [-64:-62]; and 2 guard subcarriers are on the rightmost side, and indexes may be denoted as [62:63].

It may be understood that for distribution ranges of the pilot subcarriers in the implementation 4 to the implementation 6, refer to related descriptions in the implementation 1 to the implementation 3.

In this embodiment of this application, for the bandwidth of the high frequency band PPDU including 128 subcarriers, the tone plan of the high frequency band PPDU may be that the quantity of data subcarriers is 102, the quantity of pilot subcarriers is greater than 6, and the quantity of guard subcarriers is not greater than 11. In the bandwidth of the high frequency band PPDU, it can be ensured that the packet error rate is low enough by properly designing the quantity of pilot subcarriers. Generally, a bandwidth occupied by guard subcarriers is a transition bandwidth. For example, when the transition bandwidth is specific, if a subcarrier spacing becomes large, a quantity of subcarriers included in the transition bandwidth is reduced, that is, a quantity of guard subcarriers is reduced. Therefore, in this embodiment of this application, the quantity of guard subcarriers may be less than or equal to 11.

FIG. 6 is a schematic flowchart of a communication method according to an embodiment of this application. For a first communication apparatus and a second communication apparatus in the method, refer to the foregoing descriptions about the communication system. Details are not described herein again. As shown in FIG. 6, the method includes the following steps.

601: The first communication apparatus generates a PPDU, where a bandwidth for transmitting the PPDU includes N subcarriers, and N1 data subcarriers in the N subcarriers correspond to data subcarriers in an RU or an MRU.

For example, the PPDU shown in step 601 may also be referred to as a high frequency band PPDU, a high frequency PPDU, a UHR PPDU, or the like. For related descriptions of the high frequency band, a frame format of the PPDU, and the bandwidth of the PPDU, refer to related descriptions of step 501 or the terms. Details are not described herein again. If an example in which the bandwidth of the PPDU includes the N subcarriers is still used, the method shown in FIG. 6 may further be described as follows.

N2 subcarriers in the N subcarriers correspond to subcarriers in the RU or the MRU. For example, the N1 data subcarriers in the N subcarriers correspond to the data subcarriers in the RU or the MRU. N2-N1 pilot subcarriers in the N subcarriers correspond to pilot subcarriers in the RU or the MRU. In other words, a quantity of data subcarriers and a quantity of some pilot subcarriers in the N subcarriers correspond to a quantity of data subcarriers and a quantity of pilot subcarriers in the RU or the MRU. Both N1 and N2 are integers less than N, and N2 is greater than N1.

A coding scheme (for example, the coding scheme may be LDPC coding or binary convolutional coding (binary convolutional coding, BCC)) of the N1 data subcarriers corresponds to a coding scheme (for example, the coding scheme may be LDPC coding or BCC coding) of the RU or the MRU. For example, the quantity of data subcarriers in the bandwidth of the PPDU and the LDPC coding of the data subcarriers are the same as the quantity of data subcarriers in the RU or the MRU and the LDPC coding of the data subcarriers. For example, a total quantity of subcarriers included in the RU or the MRU is less than 242, where

in an example, N=128, and N1=102. For example, the RU may be a 106-tone RU. For the 106-tone RU, refer to related descriptions in the term 9. For example, the 106-tone RU includes 102 data subcarriers and 4 pilot subcarriers. For example, the 106-tone RU includes the 4 pilot subcarriers. In addition, N3 pilot subcarriers may be further added, and N3+4 pilot subcarriers are a quantity of pilot subcarriers in the N subcarriers, where for example, N3+4=8, or N3+4=10, or N3+4=12, or N3+4=14, or N3+4=16, or N3+4=18, or N3+4=20. For the quantity of pilot subcarriers in the N subcarriers, refer to FIG. 5a, where in another example, N=128, and N1=72. For example, the MRU may be a 52+26-tone MRU. For the 52+26-tone MRU, refer to related descriptions in the term 9. For example, the 52+26-tone MRU includes 72 data subcarriers and 6 pilot subcarriers. For example, the 106-tone RU includes the 4 pilot subcarriers. In addition, N4 pilot subcarriers may be further added, and N4+6 pilot subcarriers are a quantity of pilot subcarriers in the N subcarriers, where for example, N4+6=8, or N4+6=10, or N4+6=12, or N4+6=14, or N4+6=16, or N4+6=18, or N4+6=20. For the quantity of pilot subcarriers in the N subcarriers, refer to FIG. 5a.

This embodiment of this application is also applicable to a case in which N is another value. For example, when N=64 or N=256, the data subcarriers in the bandwidth of the PPDU may alternatively correspond to one RU or one MRU. Examples are not enumerated herein.

For specific descriptions of generating the PPDU by the first communication apparatus, refer to FIG. 3a. Details are not described herein again. For example, for pre-FEC PHY padding and post-FEC PHY padding, different quantities of data subcarriers indicate different quantities $N_{DBPS}$ of data bits carried on OFDM symbols and different processes of calculating quantities of padding bits, and corresponding implementation circuits are also different. A row-column interleaving manner of an LDPC tone mapper may change a sequence of QAM symbols carried on data subcarriers. When quantities of data subcarriers are different, implementation of the LDPC tone mapper is different, and corresponding implementation circuits are also different. A spatial and frequency mapper may map a data subcarrier, a pilot subcarrier, a guard subcarrier, and a direct current subcarrier to corresponding subcarrier indexes. When quantities of data subcarriers and locations of the data subcarriers are different, and quantities of pilot subcarriers and locations of the pilot subcarriers are different, implementation processes of the spatial and frequency mapper are also different, and corresponding implementation circuits are also different.

When the quantity of data subcarriers in the bandwidth of the high frequency band PPDU shown in this embodiment of this application and the LDPC coding of the data subcarriers are the same as the quantity of data subcarriers in the RU or the MRU and the LDPC coding of the data subcarriers, modes of the pre-FEC PHY padding, the post-FEC PHY padding, and LDPC tone mapping may be the same (that is, generation modes/generation circuits are the same), and spatial and frequency mapping modes may be different. FIG. 3a is used as an example. Generation modes of the high frequency band PPDU other than the spacial and frequency mapping may be the same as generation modes of the low frequency band PPDU. In this way, a baseband chip in the first communication apparatus may reuse a baseband chip, in a communication apparatus, that is in a low frequency band protocol and that is used to generate a PPDU, so that a change to the baseband chip is minimized, and the baseband chip, in the communication apparatus, that is in the low frequency band protocol and that is used to generate the PPDU is reused to a maximum extent. Therefore, design, development, and test costs of the baseband chip are effectively reduced.

For example, the RU or the MRU may be obtained based on an OFDMA access mode. In consideration that in an 820.11ax OFDMA access mode, a 106-tone RU includes 102 data subcarriers and 4 pilot subcarriers, signals carried on 102 data subcarriers in the bandwidth of the high frequency band PPDU may be generated via a generation circuit of the signals carried on the data subcarriers in the 106-tone RU. The bandwidth of the high frequency band PPDU includes 128 subcarriers, the quantity of data subcarriers is 102, and a quantity of subcarriers included in the RU is less than 242. For example, the RU is an RU including 106 subcarriers, and the 106 subcarriers include 102 data subcarriers. For example, a 52+26-tone RU includes 72 data subcarriers and 6 pilot subcarriers, signals carried on 72 data subcarriers in the bandwidth of the high frequency band PPDU may be generated via a generation circuit of the signals carried on the data subcarriers in the 52+26-tone RU. The bandwidth of the high frequency band PPDU includes 128 subcarriers, the quantity of data subcarriers is 72, and a quantity of subcarriers included in the MRU is less than 242. For example, the MRU is an MRU including 78 subcarriers, and the 78 subcarriers include 72 data subcarriers. Therefore, after the data subcarriers are generated, a part of circuit of the spacial and frequency mapping in the first communication apparatus changes, a part of circuit of pilot processing in the second communication apparatus changes, and a low frequency band circuit may be reused for another part, so that the baseband chip is highly reused.

It can be learned from the description of the pilot subcarrier in the term 5 and the description of the data subcarrier in FIG. 3a that, in the first communication apparatus, a generation process of a signal carried on the pilot subcarrier is independent of a generation process of a signal carried on the data subcarrier. Therefore, for a determining manner of a signal carried on the pilot subcarrier in the RU or the MRU, refer to the description of the term 5. Details are not described in this embodiment of this application. A total quantity of data subcarriers in the bandwidth of the high frequency band PPDU may correspond to a total quantity of data subcarriers in the RU or the MRU, and the N2-N1 pilot subcarriers in pilot subcarriers in the bandwidth of the high frequency band PPDU may correspond to a total quantity of pilot subcarriers in the RU or the MRU. This embodiment of this application imposes no limitation on whether an index of the data subcarrier in the bandwidth of the high frequency band PPDU is the same as an index of the data subcarrier in the RU or the MRU, and whether an index of the pilot subcarrier in the bandwidth of the high frequency band PPDU is the same as an index of the pilot subcarrier in the RU or the MRU.

For example, for the quantity of pilot subcarriers, indexes of the pilot subcarriers, pilot values of the pilot subcarriers, the quantity of data subcarriers, and indexes of the data subcarriers in the high frequency band PPDU shown in FIG. 6, refer to related descriptions of FIG. 5a, or refer to the implementation 1 to the implementation 6. Details are not described herein again.

602: The first communication apparatus transmits the PPDU in the high frequency band, and correspondingly, the second communication apparatus receives the PPDU in the high frequency band.

For related descriptions of step 602, refer to step 502. Details are not described herein again.

603: The second communication apparatus parses the PPDU.

For specific descriptions of step 603, refer to step 503. Details are not described herein again.

For specific descriptions of parsing the PPDU by the second communication apparatus, further refer to FIG. 3b. Details are not described herein again. For example, for the pilot processing, the second communication apparatus needs to determine the signal carried on the pilot subcarrier. Different quantities of pilot subcarriers indicate different generation processes of signals carried on the pilot subcarriers, and corresponding implementation circuits may also be different. Quantities of pilot subcarriers that are in the pilot subcarriers and that are used for phase offset estimation and averaging may also be different. Deinterleaving is an inverse process of the LDPC tone mapper, and the sequence of the QAM symbols carried on the data subcarriers is restored in the row-column interleaving manner of the LDPC tone mapper. Therefore, different quantities of data subcarriers indicate different deinterleaving processes, and corresponding implementation circuits may also be different.

When the quantity of data subcarriers in the bandwidth of the PPDU shown in this embodiment of this application and the LDPC coding of the data subcarriers are the same as the quantity of data subcarriers in the RU or the MRU and the LDPC coding of the data subcarriers, deinterleaving manners may be the same, and pilot processing may be different. FIG. 3b is used as an example. Parsing modes of the high frequency band PPDU other than the pilot processing may be the same as parsing modes of the low frequency band PPDU. For related descriptions of step 603, further refer to step 601. Details are not described herein again.

In this embodiment of this application, when the N1 data subcarriers in the bandwidth of the high frequency band PPDU correspond to the data subcarriers in the RU or the MRU, utilization efficiency of the baseband chip can be effectively improved. For example, the generation mode of the signal carried on the data subcarrier in the bandwidth of the high frequency band PPDU may correspond to the generation mode of the signal carried on the data subcarrier in the RU or the MRU, so that the baseband chip can implement the generation mode of the signal carried on the data subcarrier in the bandwidth of the high frequency band PPDU, and can further implement a generation mode of a signal carried on a data subcarrier in a bandwidth of the low frequency band PPDU. The foregoing description may also be understood as follows: A baseband chip for generating the low frequency band PPDU may be reused as the baseband chip for generating the high frequency band PPDU.

FIG. 5a may be a separate embodiment, or FIG. 6 may be a separate embodiment. Alternatively, the related method shown in FIG. 5a may be combined with the method shown in FIG. 6. When FIG. 5a and FIG. 6 are combined, the quantity of data subcarriers in the related method shown in FIG. 5a may be the same as the quantity of data subcarriers in the RU or the MRU. Alternatively, for the quantity of pilot subcarriers, the pilot values, and the indexes in the method shown in FIG. 6, refer to the implementation 1 to the implementation 6. Specific combination manners are not enumerated herein again.

The following describes a communication apparatus according to an embodiment of this application.

In this application, the communication apparatus may be divided into functional modules according to the foregoing method embodiments. For example, functional modules may be obtained through division based on corresponding functions, or two or more functions may be integrated into one processing module. The integrated module may be implemented in a form of hardware, or may be implemented in a form of a software functional module. It should be noted that, in this application, module division is an example, and is merely logical function division. In actual implementation, another division manner may be used. The following describes in detail communication apparatuses in embodiments of this application with reference to FIG. 7 to FIG. 9.

FIG. 7 is a diagram of a structure of a communication apparatus according to an embodiment of this application. As shown in FIG. 7, the communication apparatus includes a processing unit 701 and a transceiver unit 702. The transceiver unit 702 may implement a corresponding communication function, and the processing unit 701 is configured to process data. For example, the transceiver unit 702 may also be referred to as an interface, a communication interface, a communication unit, or the like.

In some embodiments of this application, the communication apparatus may be configured to perform actions performed by the first communication apparatus in the foregoing method embodiments. In this case, the communication apparatus may be a Wi-Fi device or a component (like a chip, or a system, or a functional module) that may be configured in a Wi-Fi device. The transceiver unit 702 is configured to perform a receiving/-sending-related operation of the first communication apparatus in the foregoing method embodiments, and the processing unit 701 is configured to perform a processing-related operation of the first communication apparatus in the foregoing method embodiments.

For example, the processing unit 701 is configured to generate a PPDU.

The transceiver unit 702 is configured to send or output the PPDU.

FIG. 7 is reused. In some other embodiments of this application, the communication apparatus may be configured to perform actions performed by the second communication apparatus in the foregoing method embodiments. In this case, the communication apparatus may be a Wi-Fi device or a component (like a chip, or a system, or a functional module) that may be configured in a Wi-Fi device. The transceiver unit 702 is configured to perform a receiving/sending-related operation of the second communication apparatus in the foregoing method embodiments, and the processing unit 701 is configured to perform a processing-related operation of the second communication apparatus in the foregoing method embodiments.

For example, the transceiver unit 702 is configured to input or receive a PPDU.

The processing unit 701 is configured to parse the PPDU.

Optionally, in the foregoing embodiments, the communication apparatus may further include a storage unit. The storage unit may be configured to store instructions and/or data. The processing unit 701 may read the instructions and/or the data in the storage unit, so that the communication apparatus implements the foregoing method embodiments. For example, the storage unit may be configured to store an index of each subcarrier, and the like.

In the foregoing embodiments, for specific descriptions of terms, steps, or the like, refer to the descriptions in the foregoing method embodiments. Details are not described herein again.

It may be understood that specific descriptions of the transceiver unit and the processing unit in the foregoing embodiments are merely examples. For specific functions, steps, or the like performed by the transceiver unit and the processing unit, refer to the foregoing method embodiments. Details are not described herein again.

The foregoing describes the communication apparatus in embodiments of this application. The following describes possible product forms of the communication apparatus. It should be understood that any form of product that has functions of the communication apparatus in FIG. 7 falls within the protection scope of embodiments of this application. It should be further understood that the following descriptions are merely examples, and do not limit the product form of the communication apparatus in embodiments of this application.

In a possible implementation, in the communication apparatus shown in FIG. 7, the processing unit 701 may be one or more processors. The transceiver unit 702 may be a transceiver. Alternatively, the transceiver unit 702 may be a sending unit and a receiving unit. The sending unit may be a transmitter, the receiving unit may be a receiver, and the sending unit and the receiving unit are integrated into one component, for example, a transceiver. In embodiments of this application, the processor and the transceiver may be coupled, and a connection manner between the processor and the transceiver is not limited in embodiments of this application. In a process of performing the foregoing method, a process of sending information in the foregoing method can be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method can be understood as a process of receiving the input information by the processor. When the processor receives the input information, the transceiver receives the foregoing information, and inputs the information to the processor. Further, after the transceiver receives the foregoing information, other processing may need to be performed on the information before the information is input to the processor.

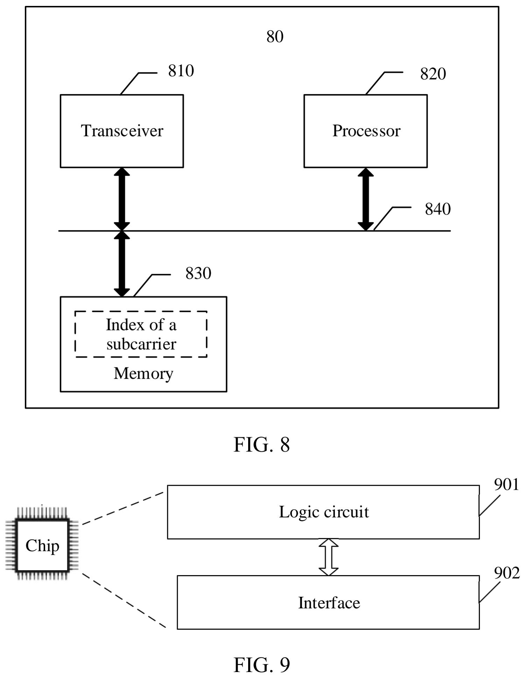

As shown in FIG. 8, a communication apparatus 80 includes one or more processors 820 and a transceiver 810.

For example, when the communication apparatus is configured to perform the steps, the methods, or the functions performed by the first communication apparatus or the first communication apparatus, the processor 820 is configured to generate a PPDU; and the transceiver 810 is configured to send the PPDU.

For example, when the communication apparatus is configured to perform the steps, the methods, or the functions performed by the second communication apparatus or the second communication apparatus, the transceiver 810 is configured to receive a PPDU; and the processor 820 is further configured to parse the PPDU.

In the foregoing embodiments, for specific descriptions of terms, steps, and the like, refer to the descriptions in the foregoing method embodiments. Details are not described herein again.

In each implementation of the communication apparatus shown in FIG. 8, the transceiver may include a receiver and a transmitter. The receiver is configured to perform a function (or operation) of receiving, and the transmitter is configured to perform a function (or operation) of transmitting. The transceiver is configured to communicate with another device/apparatus by using a transmission medium.

Optionally, the communication apparatus 80 may further include one or more memories 830, configured to store program instructions and/or data. The memory 830 is coupled to the processor 820. The coupling in embodiments of this application may be indirect coupling or a communication connection between apparatuses, units, or modules in an electrical form, a mechanical form, or another form, and is used for information exchange between the apparatuses, the units, or the modules. The processor 820 may cooperate with the memory 830. The processor 820 may execute the program instructions stored in the memory 830. Optionally, at least one of the one or more memories may be included in the processor. In this embodiment of this application, the memory 830 may store an index of each subcarrier, and the like.

A specific connection medium between the transceiver 810, the processor 820, and the memory 830 is not limited in this embodiment of this application. In this embodiment of this application, the memory 830, the processor 820, and the transceiver 810 are connected to each other through a bus 840 in FIG. 8. The bus is represented by using a thick line in FIG. 8. A connection manner between other components is merely an example for description, and is not limited thereto. The bus may be classified into an address bus, a data bus, a control bus, and the like. For ease of representation, only one thick line is for representing the bus in FIG. 8, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed in embodiments of this application may be directly performed by a hardware processor, or may be performed by using a combination of hardware and software modules in the processor.

In embodiments of this application, the memory may include but is not limited to a non-volatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any other medium that can carry or store program code in a form of instructions or a data structure and that can be read and/or written by a computer (for example, the communication apparatus shown in this application), but is not limited thereto. The memory in embodiments of this application may alternatively be a circuit or any other apparatus that can implement a storage function, and is configured to store the program instructions and/or the data.

The processor 820 is mainly configured to: process a communication protocol and communication data, control the entire communication apparatus, execute a software program, and process data of the software program. The memory 830 is mainly configured to store the software program and the data. The transceiver 810 may include a control circuit and an antenna. The control circuit is mainly configured to: perform conversion between a baseband signal and a radio frequency signal, and process the radio frequency signal. The antenna is mainly configured to send and receive a radio frequency signal in a form of an electromagnetic wave. An input/output apparatus, for example, a touchscreen, a display, a keyboard, or the like is mainly configured to: receive data input by a user, and output data to the user.

After the communication apparatus is powered on, the processor 820 may read the software program in the memory 830, interpret and execute instructions of the software program, and process the data of the software program. When data needs to be wirelessly sent, after performing baseband processing on the to-be-sent data, the processor 820 outputs a baseband signal to a radio frequency circuit. After performing radio frequency processing on the baseband signal, the radio frequency circuit sends a radio frequency signal in the form of the electromagnetic wave via the antenna. When data is sent to the communication apparatus, the radio frequency circuit receives a radio frequency signal via the antenna, converts the radio frequency signal into a baseband signal, and outputs the baseband signal to the processor 820. The processor 820 converts the baseband signal into data, and processes the data.

In another implementation, the radio frequency circuit and the antenna may be disposed independently of a processor that performs baseband processing. For example, in a distributed scenario, the radio frequency circuit and the antenna may be remotely disposed independent of the communication apparatus.

It may be understood that the communication apparatus shown in this embodiment of this application may further have more components and the like than those in FIG. 8. This is not limited in this embodiment of this application. The foregoing methods performed by the processor and the transceiver are merely examples. For specific steps performed by the processor and the transceiver, refer to the methods described above.

In another possible implementation, in the communication apparatus shown in FIG. 7, the processing unit 701 may be one or more logic circuits, and the transceiver unit 702 may be an input/output interface, or referred to as a communication interface, an interface circuit, an interface, or the like. Alternatively, the transceiver unit 702 may be a sending unit and a receiving unit. The sending unit may be an output interface, and the receiving unit may be an input interface. The sending unit and the receiving unit are integrated into one unit, for example, an input/output interface. As shown in FIG. 9, a communication apparatus shown in FIG. 9 includes a logic circuit 901 and an interface 902. To be specific, the processing unit 701 may be implemented by using the logic circuit 901, and the transceiver unit 702 may be implemented through the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 9 is an example in which the foregoing communication apparatus is used as a chip. The chip includes the logic circuit 901 and the interface 902.

In this embodiment of this application, the logic circuit and the interface may be further coupled to each other. A specific connection manner of the logic circuit and the interface is not limited in this embodiment of this application.

For example, when the communication apparatus is configured to perform the methods, the functions, or the steps performed by the first communication apparatus or a terminal device, the logic circuit 901 is configured to generate a PPDU; and the interface 902 is configured to output the PPDU.

For example, when the communication apparatus is configured to perform the methods, the functions, or the steps performed by the second communication apparatus or a network device, for example, the interface 902 is configured to input a PPDU; and the logic circuit 901 is configured to parse the PPDU.

For example, the chip shown in FIG. 9 may further include a memory. The memory may be configured to store an index of each subcarrier, and the like.

It may be understood that the communication apparatus shown in embodiments of this application may implement the methods according to embodiments of this application in a form of hardware, or may implement the methods according to embodiments of this application in a form of software. This is not limited in embodiments of this application.

In the foregoing embodiments, for related descriptions of terms, steps, and the like, refer to the descriptions in the foregoing method embodiments. Details are not described herein again.

For specific implementations of embodiments shown in FIG. 9, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method according to any one of the foregoing embodiments.

In addition, this application further provides a computer program. The computer program is used to implement operations and/or processing performed by the first communication apparatus device in the methods according to this application.

This application further provides a computer program. The computer program is used to implement operations and/or processing performed by the second communication apparatus device in the methods according to this application.

This application further provides a computer-readable storage medium. The computer-readable storage medium stores computer code. When the computer code is run on a computer, the computer is enabled to perform operations and/or processing performed by the first communication apparatus device in the methods according to this application.

This application further provides a computer-readable storage medium. The computer-readable storage medium stores computer code. When the computer code is run on a computer, the computer is enabled to perform operations and/or processing performed by the second communication apparatus device in the methods according to this application.

This application further provides a computer program product. The computer program product includes computer code or a computer program. When the computer code or the computer program is run on a computer, operations and/or processing performed by the first communication apparatus device in the methods according to this application are/is performed.

This application further provides a computer program product. The computer program product includes computer code or a computer program. When the computer code or the computer program is run on a computer, operations and/or processing performed by the second communication apparatus device in the methods according to this application are/is performed.

In the several embodiments according to this application, it should be understood that the disclosed systems, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement technical effect of the solutions according to embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and is sold or used as an independent product, the integrated unit may be stored in a computer-readable storage medium. Based on such an understanding, the technical solutions of embodiments of this application essentially, or the part contributing to the conventional technology, all or some of the technical solutions may be implemented in a form of a software product. The computer software product is stored in a readable-storage medium, and includes several instructions for instructing a computer device (which may be a personal computer, a server, or a network device) to perform all or some of the steps of the methods described in embodiments of this application. The foregoing readable-storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   generating a physical layer protocol data unit PPDU; and
   transmitting the PPDU in a high frequency band, wherein a bandwidth for transmitting the PPDU comprises 128 subcarriers, and a quantity of pilot subcarriers in the 128 subcarriers is greater than 6.

2. A communication method, wherein the method comprises:

    receiving a physical layer protocol data unit PPDU in a high frequency band, wherein a bandwidth for transmitting the PPDU comprises 128 subcarriers, and a quantity of pilot subcarriers in the 128 subcarriers is greater than 6; and
    parsing the PPDU.

3. The method according to claim 1 or 2, wherein the quantity of pilot subcarriers in the bandwidth for transmitting the PPDU is any one of the following: 8, 10, 12, 14, 16, 18, and 20.

4. The method according to any one of claims 1 to 3, wherein a quantity of data subcarriers in the bandwidth for transmitting the PPDU is less than 108.

5. The method according to claim 4, wherein the quantity of data subcarriers in the bandwidth for transmitting the PPDU is 102.

6. The method according to any one of claims 1 to 5, wherein a quantity of guard subcarriers in the bandwidth for transmitting the PPDU is less than or equal to 11.

7. The method according to any one of claims 1 to 6, wherein the quantity of pilot subcarriers is 12, and pilot values of the pilot subcarriers are any one of the following:

$$[1\ 1\ 1\ -1\ -1\ 1\ 1\ 1\ 1\ -1\ -1\ 1],$$

$$[1\ 1\ 1\ -1\ -1\ 1\ 1\ 1\ 1\ 1\ 1\ -1],$$

and

$$[1\ 1\ 1\ -1\ 1\ 1\ 1\ -1\ -1\ 1\ 1\ 1];$$

or
the quantity of pilot subcarriers is 14, and pilot values of the pilot subcarriers are any one of the following:

$$[1\ 1\ 1\ -1\ -1\ 1\ 1\ 1\ 1\ 1\ 1\ -1\ -1\ 1],$$

and

$$[1\ 1\ 1\ -1\ -1\ 1\ 1\ 1\ 1\ -1\ -1\ 1\ 1\ 1].$$

8. The method according to any one of claims 1 to 7, wherein the quantity of pilot subcarriers is 12, and indexes of the pilot subcarriers are [-51, -42, -33, -24, -15, -6, 6, 15, 24, 33, 42, 51], or [-53, -39, -25, -18, -11, -7, 7, 11, 18, 25, 39, 53]; or

the quantity of pilot subcarriers is 14, and indexes of the pilot subcarriers are [-53, -45, -37, -29, -21, -13, -5, 5, 13, 21, 29, 37, 45, 53], or [-55, -53, -39, -25, -18, -11, -6, 6, 11, 18, 25, 39, 53, 55].

9. The method according to any one of claims 1 to 8, wherein
the quantity of data subcarriers in the bandwidth for transmitting the PPDU and a coding scheme of the data subcarriers are the same as a quantity of data subcarriers in a resource unit RU or a multiple resource unit MRU and a coding scheme of the data subcarriers, and a quantity of subcarriers comprised in the RU or the MRU is less than 242.

10. The method according to claim 9, wherein the RU is an RU comprising 106 subcarriers, and the 106 subcarriers comprise 102 data subcarriers.

11. The method according to any one of claims 1 to 10, wherein the bandwidth for transmitting the PPDU is 320 MHz or 640 MHz.

12. A communication apparatus, wherein the apparatus comprises:

    a processing unit, configured to generate a physical layer protocol data unit PPDU; and
    a transceiver unit, configured to transmit the PPDU in a high frequency band, wherein a bandwidth for transmitting the PPDU comprises 128 subcarriers, and a quantity of pilot subcarriers in the 128 subcarriers is greater than 6.

13. A communication apparatus, wherein the apparatus comprises:

    a transceiver unit, configured to receive a physical layer protocol data unit PPDU in a high frequency band, wherein a bandwidth for transmitting the PPDU comprises 128 subcarriers, and a quantity of pilot subcarriers in the 128 subcarriers is greater than 6; and
    a processing unit, configured to parse the PPDU.

14. The apparatus according to claim 12 or 13, wherein the quantity of pilot subcarriers in the bandwidth for transmitting the PPDU is any one of the following: 8, 10, 12, 14, 16, 18, and 20.

15. The apparatus according to any one of claims 12 to 14, wherein a quantity of data subcarriers in the bandwidth for transmitting the PPDU is less than 108.

16. The apparatus according to claim 15, wherein the quantity of data subcarriers in the bandwidth for transmitting the PPDU is 102.

17. The apparatus according to any one of claims 12 to 16, wherein a quantity of guard subcarriers in the bandwidth for transmitting the PPDU is less than or equal to 11.

18. The apparatus according to any one of claims 12 to 17, wherein the quantity of pilot subcarriers is 12, and pilot values of the pilot subcarriers are any one of the following:

$$[1\ 1\ 1\ -1\ -1\ 1\ 1\ 1\ 1\ -1\ -1\ 1],$$

$$[1\ 1\ 1\ -1\ -1\ 1\ 1\ 1\ 1\ 1\ 1\ -1],$$

and

$$[1\ 1\ 1\ -1\ 1\ 1\ 1\ -1\ -1\ 1\ 1\ 1];$$

or
the quantity of pilot subcarriers is 14, and pilot values of the pilot subcarriers are any one of the following:

$$[1\ 1\ 1\ -1\ -1\ 1\ 1\ 1\ 1\ 1\ 1\ -1\ -1\ 1],$$

and

$$[1\ 1\ 1\ -1\ -1\ 1\ 1\ 1\ 1\ -1\ -1\ 1\ 1\ 1].$$

19. The apparatus according to any one of claims 12 to 18, wherein the quantity of pilot subcarriers is 12, and indexes of the pilot subcarriers are [-51, -42, -33, -24, -15, -6, 6, 15, 24, 33, 42, 51], or [-53, -39, -25, -18, -11, -7, 7, 11, 18, 25, 39, 53]; or
the quantity of pilot subcarriers is 14, and indexes of the pilot subcarriers are [-53, -45, -37, -29, -21, -13, -5, 5, 13, 21, 29, 37, 45, 53], or [-55, -53, -39, -25, -18, -11, -6, 6, 11, 18, 25, 39, 53, 55].

20. The apparatus according to any one of claims 12 to 19, wherein
the quantity of data subcarriers in the bandwidth for transmitting the PPDU and a coding scheme of the data subcarriers are the same as a quantity of data subcarriers in a resource unit RU or a multiple resource unit MRU and a coding scheme of the data subcarriers, and a quantity of subcarriers comprised in the RU or the MRU is less than 242.

21. The apparatus according to claim 20, wherein the RU is an RU comprising 106 subcarriers, and the 106 subcarriers comprise 102 data subcarriers.

22. The apparatus according to any one of claims 12 to 21, wherein the bandwidth for transmitting the PPDU is 320 MHz or 640 MHz.

23. A communication apparatus, comprising a processor, wherein the processor is configured to perform the method according to any one of claims 1 to 11.

24. A communication apparatus, comprising a logic circuit and an interface, wherein the logic circuit is coupled to the interface; and
the interface is configured to input and/or output code instructions, and the logic circuit is configured to execute the code instructions, to enable the method according to any one of claims 1 to 11 to be performed.

25. A computer-readable storage medium, wherein the computer-readable storage medium is configured to store a computer program, and when the computer program is executed, the method according to any one of claims 1 to 11 is performed.

26. A communication system, wherein the communication system comprises a first communication apparatus and a second communication apparatus, the first communication apparatus is configured to perform the method according to claim 1 and any one of claims 3 to 11, and the second communication apparatus is configured to perform the method according to any one of claims 2 to 11.

FIG. 1

| L-STF | L-LTF | L-SIG | HT-SIG | HT-STF | HT-LTF | ... | HT-LTF | Data |
|-------|-------|-------|--------|--------|--------|-----|--------|------|

Pre-HT modulation domain
(for example, legacy)

HT modulation domain
(for example, HT)

FIG. 2a

FIG. 2b

| L-STF | L-LTF | L-SIG | VHT-SIG-A | VHT-STF | VHT-LTF | VHT-SIG-B | Data |

Pre-VHT modulation domain (for example, legacy)

VHT modulation domain (for example, VHT)

| L-STF | L-LTF | L-SIG | RL-SIG | HE-SIG-A | HE-SIG-B | HE-STF | HE-LTF | ... | HE-LTF | Data | PE |

Pre-HE modulation domain
(for example, legacy)

HE modulation domain
(for example, HE)

FIG. 2c

EP 4 712 634 A1

EHT PPDU

| EHT-SIG common | EHT-SIG user specific |
|---|---|

| L-STF | L-LTF | L-SIG | RL-SIG | U-SIG SYM 1 | U-SIG SYM 2 | EHT-SIG | EHT-STF | EHT-LTF | Data |
|---|---|---|---|---|---|---|---|---|---|

| Version independent information | Version dependent information | Cyclic redundancy code | Tail |
|---|---|---|---|

FIG. 2d

Pre-FEC PHY padding
(padding)

↓

Scrambling (scrambler)

↓

LDPC encoding (encoder)

↓

Post-FEC PHY padding
(padding)

↓

Stream parsing (stream parser)

| Constellation mapping (constellation mapper) | ... | Constellation mapping (constellation mapper) |
|---|---|---|
| LDPC tone mapping (LDPC tone mapper) | ... | LDPC tone mapping (LDPC tone mapper) |
| Stream cyclic shift (CSD per SS) | ... | Stream cyclic shift (CSD per SS) |

Space-time streams (spatial streams)

Spatial and frequency mapping
(spatial and frequency mapping)

| Inverse discrete Fourier transform (IDFT) | ... | Inverse discrete Fourier transform (IDFT) |
|---|---|---|
| Guard interval insertion and windowing (insert GI and window) | ... | Guard interval insertion and windowing (insert GI and window) |
| Analog and radio frequency (analog and RF) | ... | Analog and radio frequency (analog and RF) |

Transmit chains (transmit chains)

FIG. 3a

```
┌─────────────────────────┐        ┌─────────────────────────┐
│ Descrambling (descrambler) │      │ Descrambling (descrambler) │
└─────────────────────────┘        └─────────────────────────┘
            ↑                                  ↑
┌─────────────────────────┐        ┌─────────────────────────┐
│ LDPC decoding (deencoder) │      │ LDPC decoding (deencoder) │
└─────────────────────────┘        └─────────────────────────┘
            ↑                                  ↑
┌─────────────────────────┐        ┌─────────────────────────┐
│  Constellation demapping │  ...  │  Constellation demapping │
│ (constellation demapper) │       │ (constellation demapper) │
└─────────────────────────┘        └─────────────────────────┘
            ↑                                  ↑
┌─────────────────────────┐        ┌─────────────────────────┐
│ Deinterleaving (demapper) │ ...  │ Deinterleaving (demapper) │
└─────────────────────────┘        └─────────────────────────┘
            ↑                                  ↑
┌──────────────────────────────────────────────────────────┐
│                     Pilot processing                      │
└──────────────────────────────────────────────────────────┘
            ↑                                  ↑
┌─────────────────────────┐        ┌─────────────────────────┐
│ Discrete Fourier transform │ ... │ Discrete Fourier transform │
│           (DFT)           │      │           (DFT)           │
└─────────────────────────┘        └─────────────────────────┘
            ↑                                  ↑
┌─────────────────────────┐        ┌─────────────────────────┐
│   Cyclic prefix removal   │ ...  │   Cyclic prefix removal   │
└─────────────────────────┘        └─────────────────────────┘
            ↑                                  ↑
┌─────────────────────────┐        ┌─────────────────────────┐
│ Analog and radio frequency │ ... │ Analog and radio frequency │
│    (analog and RF)        │      │    (analog and RF)        │
└─────────────────────────┘        └─────────────────────────┘
            ↑                                  ↑
```

FIG. 3b

FIG. 4a

FIG. 4b

First communication apparatus

Second communication apparatus

501

Generate a PPDU, where a bandwidth of the PPDU includes N subcarriers, and M subcarriers are pilot subcarriers

502

PPDU

503

Parse the PPDU

FIG. 5a

6 guard subcarriers, where indexes are [−64, −63, −62, −61, −60, −59]

5 direct current subcarriers, where indexes are [−2, −1, 0, 1, 2]

5 guard subcarriers, where indexes are [59, 60, 61, 62, 63]

FIG. 5b

FIG. 5c

FIG. 5d

-64   -59   -53   -45   -37   -29   -21   -13   -5   0   5   13   21   29   37   45   53   59   63

6 guard subcarriers, where indexes are [-64, -63, -62, -61, -60, -59]

Direct current subcarrier, where an index is [0]

5 guard subcarriers, where indexes are [59, 60, 61, 62, 63]

FIG. 5e

6 guard subcarriers, where indexes are [−64, −63, −62, −61, −60, −59]

Direct current subcarrier, where an index is [0]

5 guard subcarriers, where indexes are [59, 60, 61, 62, 63]

−64   −59   −55   −53   −39   −25   −18   −11   −6   0   6   11   18   25   39   53   55   59   63

FIG. 5f

First communication apparatus

Second communication apparatus

A bandwidth for transmitting a PPDU includes N subcarriers, and N1 data subcarriers in the N subcarriers correspond to data subcarriers in an RU or an MRU

601

PPDU

602

Parse the PPDU

603

FIG. 6

Processing unit

701

Transceiver unit

702

Communication apparatus

FIG. 7

80

810

Transceiver

820

Processor

840

830

Index of a
subcarrier

Memory

FIG. 8

901

Logic circuit

Chip

902

Interface

FIG. 9

## INTERNATIONAL SEARCH REPORT

| | International application No. |
|---|---|
| | **PCT/CN2024/097062** |

### A. CLASSIFICATION OF SUBJECT MATTER

H04W 72/0453(2023.01)i

According to International Patent Classification (IPC) or to both national classification and IPC

### B. FIELDS SEARCHED

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT, CNABS, ENTXTC, DWPI, 3GPP, CNKI: 高频段, 低频段, 误包率, 丢包率, 协议数据单元, 子载波, 导频, 45GHZ, 60GHZ, 802.11ay, 802.11aj, high frequency, low frequency, packet loss, PPDU, sub carrier, pilot.

### C. DOCUMENTS CONSIDERED TO BE RELEVANT

| Category* | Citation of document, with indication, where appropriate, of the relevant passages | Relevant to claim No. |
|---|---|---|
| Y | CN 111148243 A (HUAWEI TECHNOLOGIES CO., LTD.) 12 May 2020 (2020-05-12) description, paragraphs 664-829 | 1-3, 11-14, 22-26 |
| Y | US 2019173710 A1 (MARVELL WORLD TRADE LTD.) 06 June 2019 (2019-06-06) description, paragraphs 73-81 | 1-3, 11-14, 22-26 |
| A | CN 110999100 A (INTERDIGITAL PATENT HOLDINGS, INC.) 10 April 2020 (2020-04-10) entire document | 1-26 |
| A | CN 112019470 A (HUAWEI TECHNOLOGIES CO., LTD.) 01 December 2020 (2020-12-01) entire document | 1-26 |
| A | CN 114245980 A (LG ELECTRONICS INC.) 25 March 2022 (2022-03-25) entire document | 1-26 |
| A | CN 114667706 A (QUALCOMM INC.) 24 June 2022 (2022-06-24) entire document | 1-26 |
| A | CN 115699695 A (LG ELECTRONICS INC.) 03 February 2023 (2023-02-03) entire document | 1-26 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **02 July 2024** | **04 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
|---|
| **PCT/CN2024/097062** |

| Patent document cited in search report | | | Publication date (day/month/year) | Patent family member(s) | | | Publication date (day/month/year) |
|---|---|---|---|---|---|---|---|
| CN | 111148243 | A | 12 May 2020 | US | 2021258960 | A1 | 19 August 2021 |
| | | | | WO | 2020093890 | A1 | 14 May 2020 |
| US | 2019173710 | A1 | 06 June 2019 | US | 11032118 | B2 | 08 June 2021 |
| | | | | US | 2024146590 | A1 | 02 May 2024 |
| | | | | WO | 2019112721 | A1 | 13 June 2019 |
| | | | | EP | 3998753 | A1 | 18 May 2022 |
| | | | | US | 2023155869 | A1 | 18 May 2023 |
| | | | | US | 11870625 | B2 | 09 January 2024 |
| | | | | JP | 2021506202 | A | 18 February 2021 |
| | | | | JP | 7230054 | B2 | 28 February 2023 |
| | | | | US | 2021288858 | A1 | 16 September 2021 |
| | | | | US | 11558226 | B2 | 17 January 2023 |
| | | | | JP | 2023055995 | A | 18 April 2023 |
| | | | | EP | 3721593 | A1 | 14 October 2020 |
| | | | | EP | 3721593 | B1 | 19 January 2022 |
| CN | 110999100 | A | 10 April 2020 | US | 2021143887 | A1 | 13 May 2021 |
| | | | | US | 11349546 | B2 | 31 May 2022 |
| | | | | KR | 20200028894 | A | 17 March 2020 |
| | | | | KR | 102558307 | B1 | 20 July 2023 |
| | | | | EP | 3639384 | A1 | 22 April 2020 |
| | | | | US | 2023388000 | A1 | 30 November 2023 |
| | | | | WO | 2018232101 | A1 | 20 December 2018 |
| | | | | US | 2022294515 | A1 | 15 September 2022 |
| CN | 112019470 | A | 01 December 2020 | | None | | |
| CN | 114245980 | A | 25 March 2022 | EP | 4016945 | A1 | 22 June 2022 |
| | | | | EP | 4016945 | A4 | 06 September 2023 |
| | | | | WO | 2021029552 | A1 | 18 February 2021 |
| | | | | KR | 20220019807 | A | 17 February 2022 |
| | | | | KR | 102595373 | B1 | 31 October 2023 |
| | | | | US | 2022278877 | A1 | 01 September 2022 |
| | | | | US | 11996966 | B2 | 28 May 2024 |
| CN | 114667706 | A | 24 June 2022 | WO | 2021092132 | A1 | 14 May 2021 |
| | | | | KR | 20220098135 | A | 11 July 2022 |
| | | | | US | 2024171339 | A1 | 23 May 2024 |
| | | | | TW | 202126002 | A | 01 July 2021 |
| | | | | EP | 4055763 | A1 | 14 September 2022 |
| | | | | US | 2021143955 | A1 | 13 May 2021 |
| | | | | US | 11902191 | B2 | 13 February 2024 |
| CN | 115699695 | A | 03 February 2023 | KR | 20220164530 | A | 13 December 2022 |
| | | | | JP | 2023524056 | A | 08 June 2023 |
| | | | | JP | 7446483 | B2 | 08 March 2024 |
| | | | | US | 2023299908 | A1 | 21 September 2023 |
| | | | | US | 11863485 | B2 | 02 January 2024 |
| | | | | EP | 4142230 | A1 | 01 March 2023 |
| | | | | EP | 4142230 | A4 | 18 October 2023 |
| | | | | US | 2023179355 | A1 | 08 June 2023 |
| | | | | CA | 3181798 | A1 | 04 November 2021 |
| | | | | WO | 2021221289 | A1 | 04 November 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202310658282